(19) Europäisches Patentamt
European Patent Office
Office européen des brevets

(11) **EP 4 209 965 A1**

(12) **EUROPEAN PATENT APPLICATION**
published in accordance with Art. 153(4) EPC

(43) Date of publication:
**12.07.2023 Bulletin 2023/28**

(21) Application number: **21874288.0**

(22) Date of filing: **18.09.2021**

(51) International Patent Classification (IPC):
**G06N 3/04** (2023.01)          **G06N 3/08** (2023.01)
**G06F 7/523** (2006.01)

(86) International application number:
**PCT/CN2021/119306**

(87) International publication number:
**WO 2022/068627 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 CN 202011052624**

(71) Applicant: **Huawei Technologies Co., Ltd.
Shenzhen, Guangdong 518129 (CN)**

(72) Inventors:
• **LI, Zichao**
  **Shenzhen, Guangdong 518129 (CN)**
• **HOU, Lu**
  **Shenzhen, Guangdong 518129 (CN)**
• **JIANG, Xin**
  **Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **DATA PROCESSING METHOD AND RELATED DEVICE**

(57) A data processing method includes: obtaining to-be-processed data and a target neural network model, where the target neural network model includes a first transformer layer, the first transformer layer includes a first residual branch and a second residual branch, the first residual branch includes a first attention head, and the second residual branch includes a target feedforward layer FFN (601); and performing target task related processing on the to-be-processed data based on the target neural network model, to obtain a data processing result, where the target neural network model is for performing a target operation on an output of the first attention head and a first weight value to obtain an output of the first residual branch, and/or the target neural network model is for performing a target operation on an output of the target FFN and a second weight value to obtain an output of the second residual branch (603). In the method, weight values for controlling an output of a residual branch are set for different tasks, so that a computing resource requirement of a terminal device for running the target neural network model is lowered.

Obtain to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN — 601

Obtain a weight value corresponding to a target task, where the weight value includes a first weight value corresponding to the first attention head and/or a second weight value corresponding to the target FFN — 602

Process the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch — 603

FIG. 6

## Description

This application claims priority to Chinese Patent Application No. 202011052624.X, filed with the China National Intellectual Property Administration on September 29, 2020 and entitled "DATA PROCESSING METHOD AND RELATED DEVICE", which is incorporated herein by reference in its entirety.

## TECHNICAL FIELD

This application relates to the field of artificial intelligence, and in particular, to a data processing method and a related device.

## BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to study design principles and implementation methods of various intelligent machines, so that the machines have perceiving, inference, and decision-making functions.

With continuous development of artificial intelligence technologies, a natural language human-machine interaction system that enables human-machine interaction to be performed by using a natural language becomes increasingly important. The human-machine interaction to be performed by using the natural language requires the system to recognize a specific meaning of a human natural language. Generally, the system extracts key information from a natural language sentence to recognize a specific meaning of the sentence.

A transformer structure has a powerful semantic representation capability and can capture a dependency between pieces of long text. Since the transformer structure was proposed, a series of natural language processing tasks represented by translation have significantly surpassed previous models. A pre-trained language model based on the transformer structure has also achieved very good effect in fields such as a question-answering system and a voice assistant.

A transformer model has many parameters and has high requirements on computing and power consumption. For example, a Bert-base model has 12 layers, 768 hidden states, and 1.1 million parameters. Therefore, it is difficult to train an independent model for each natural language processing task, and then store the model on the terminal device. A more feasible method is to train a multi-task transformer model.

In an existing implementation, a skeleton network (for example, a BERT) may be first pre-trained, and a parameter of the skeleton network is shared by all tasks. Then, the skeleton network is used as an underlying network, and a task-specific neural network is added on the basis of the skeleton network, and is separately trained. In this method, a large quantity of parameters usually need to be added, and a requirement of a terminal device for computing resources cannot be met.

## SUMMARY

According to a first aspect, this application provides a data processing method. The method includes:

obtaining to-be-processed data and a target neural network model, where the target neural network model includes a first transformer (transformer) layer, the first transformer layer includes a first residual branch and a second residual branch, the first residual branch includes a first attention head, the second residual branch includes a target feedforward layer FFN, a branch in which a multi-head attention layer is located and a branch in which the feedforward layer FFN is located may be residual branches in the transformer layer, the to-be-processed data may be text data, the target neural network model may be a transformer model that is trained and that can perform multi-task processing, and it should be understood that, to implement different tasks, the target neural network model may include a plurality of task layers at an output location, and the task layers adapt to different tasks;

obtaining a weight value corresponding to a target task, where the weight value includes a first weight value corresponding to the first attention head and/or a second weight value corresponding to the target FFN, to adapt to different tasks, different weight values may be determined to perform an operation on an output of an attention head or an output of an FFN at the transformer layer, to control an output of a residual branch, and when executing different tasks, the target neural network model may select different weights, so that the output of the residual branch better adapts to a current task executed by the target neural network model; and

performing target task related processing on the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch.

In this embodiment, weight values for controlling an output of a residual branch are set for different tasks, which is equivalent to that a dedicated distributed representation combination of weight values may be set for each task, to implement multi-task learning of the target neural network model. In addition, in this embodiment, compared with adding a neural network adaptive to different tasks at an output layer, fewer parameters need to be learned, so that a computing resource requirement of a terminal device for running the target neural network model can be lowered.

In a possible implementation, when the target neural network model is for using the output of the first attention head as the output of the first residual branch, data processing precision of the target neural network model for the target task is less than first processing precision, and the first processing precision is data processing precision of the target neural network model when the target neural network model is for performing the target operation on the output of the first attention head and the first weight value to obtain the output of the first residual branch;

when the target neural network model is for using the output of the target FFN as the output of the second residual branch, data processing precision of the target neural network model for the target task is less than second processing precision, and the second processing precision is data processing precision of the target neural network model when the target neural network model is for performing the target operation on the output of the target FFN and the second weight value to obtain the output of the second residual branch; or
when the target neural network model is for using the output of the target FFN as the output of the second residual branch and using the output of the target FFN as the output of the second residual branch, data processing precision of the target neural network model for the target task is less than third processing precision, and the third processing precision is data processing precision of the target neural network model when the target neural network model is for performing the target operation on the output of the target FFN and the second weight value to obtain the output of the second residual branch and for performing the target operation on the output of the target FFN and the second weight value to obtain the output of the second residual branch.

In this embodiment of this application, to enable the target neural network model to adapt to different tasks (that is, to enable the target neural network model to have a high data processing capability for different tasks), a weight control policy is added to a residual branch at an original transformer layer, and different weight values are set for different tasks.

In a possible implementation, the first weight value is obtained by updating a first initial weight value when the target neural network model is trained for the target task. In a training process of the target neural network model, the target neural network model is for performing the target operation on the output of the first attention head and the first initial weight value to obtain the output of the first residual branch.

In a possible implementation, the second weight value is obtained by updating a second initial weight value when the target neural network model is trained for the target task. In a training process of the target neural network model, the target neural network model is for performing the target operation on the output of the target FFN and the second initial weight value to obtain the output of the second residual branch.

A training device may obtain the to-be-processed data, a correct data processing result of the to-be-processed data, and an initial neural network model for executing a target task. The initial neural network model includes the first transformer layer. The first transformer layer includes the first residual branch and the second residual branch. The first residual branch includes the first attention head. The second residual branch includes the target feedforward layer FFN. The initial neural network model is for performing the target operation on the output of the first attention head and the first initial weight value to obtain the output of the first residual branch, and/or the initial neural network model is for performing the target operation on the output of the target FFN and the second initial weight value to obtain the output of the second residual branch. The training device may process the to-be-processed data based on the initial neural network model to obtain the data processing result. Then, the training device may obtain the loss based on the data processing result and the correct data processing result, and update the first initial weight value and/or the second initial weight value based on the loss until data processing precision of the initial neural network model for the target task meets a requirement, to obtain the first weight value and/or the second weight value.

In this embodiment of this application, different first weight values and second weight values may be obtained for different tasks, so that the preset mapping relationship in the foregoing embodiment may be obtained.

In a possible implementation, the obtaining a weight value corresponding to a target task includes:
obtaining, based on the preset mapping relationship, the weight value corresponding to the target task, where the weight value corresponding to the target task includes the first weight value and/or the second weight value, and the preset mapping relationship includes a correspondence between a task and a weight value. Different first weight values and second weight values may be obtained for different tasks, so that the preset mapping relationship in the foregoing embodiment may be obtained.

In an implementation, the training device may obtain a loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model. In this embodiment, during one iteration, a skeleton model (the skeleton model may be understood as a partial network other than a weight value in the target neural network model) may be fixed ("fixed" may be understood as keeping a network structure and a parameter value unchanged), and the weight value is updated. Then, during a next iteration, the weight value is fixed, and the skeleton model (the partial network other than the weight value in the target neural network model) is updated.

In a possible implementation, the obtaining a weight value corresponding to a target task includes:

inputting an identifier of the target task and at least one of the to-be-processed data and the output of the first attention head into a first neural network to obtain the first weight value; and/or
inputting an identifier of the target task and at least one of the to-be-processed data and the output of the target FFN into a second neural network to obtain the second weight value.

In other words, the first neural network has a capability of allowing the identifier of the target task and at least one of the to-be-processed data and the output of the first attention head to be input, to output the first weight value. The second neural network has a capability of allowing the identifier of the target task and the to-be-processed data and/or the output of the target FFN to be input into the second neural network, to obtain the second weight value.

In this embodiment of this application, different first neural networks and second neural networks may be obtained through training for different tasks. The first neural network and the second neural network may be but are not limited to a fully connected network. During training, an initial gating value of a target may be set, and then a model is updated by using a gradient descent method, or training may be performed by using another optimization method such as a reinforcement learning algorithm or a genetic algorithm.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, and performing a target operation on an output of the first initial neural network and the output of the first attention head to obtain the output of the first residual branch.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, and performing a target operation on an output of the second initial neural network and the output of the target FFN to obtain the output of the second residual branch.

In a possible implementation, the first transformer layer includes a plurality of attention heads. Each of the plurality of attention heads corresponds to a weight value. The target neural network model is for performing a target operation on an output of each attention head and a corresponding weight value to obtain the output of the first residual branch. Different attention heads correspond to different weight values. In this embodiment of this application, the target neural network model may include a multi-head attention layer. For each task t, a weight value of an attention head may be deployed for each attention head n to control a magnitude of an output of a residual branch in which the attention head is located.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a second aspect, this application provides a data processing method. The method includes:

obtaining to-be-processed data and a target neural network model, where the target neural network model includes a first transformer layer and a second transformer layer, and the first transformer layer includes a first attention head and a target FFN;
obtaining a weight value corresponding to a target task, where the weight value includes a first weight value corresponding to the first attention head and/or a second weight value corresponding to the target FFN; and
performing target task related processing on the to-be-processed data based on the target neural network model to obtain a data processing result, where the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer. In this embodiment, the target neural network model is for performing the first operation on the output of the first attention head and the first weight value to obtain the first output. The first output is not used as an output of a first residual branch. Instead, the second operation is performed on the first output and the output of the second transformer layer. In this embodiment, the target neural network model is for performing the first operation on the target FFN and the second weight value to obtain the second output. The second output is not used as an output of a second residual branch. Instead, the second operation is performed on the second output and the output of the second transformer layer. The first operation may include a product operation. The second operation may include a sum operation.

It should be understood that the target neural network model may perform the target operation (for example, the product operation) on the output of the first attention head and the first weight value and use an operation result as the output of the first residual branch. In addition, the target neural network model may perform the sum operation on the first output and the output of the second transformer layer. Similarly, the target neural network model may perform the target operation (for example, the product operation) on the target FFN and the second weight value and use an operation result as the output of the second residual branch. In addition, the target neural network model may perform the sum operation on the second output and the output of the second transformer layer.

In a possible implementation, the target neural network model includes a plurality of transformer layers and an output layer. The second transformer layer is a transformer layer that is in the plurality of transformer layers and that is closest to the output layer.

In a possible implementation, the first transformer layer includes a first residual branch and a second residual branch. The first residual branch includes the first attention head.

When the target neural network model is for using the output of the first attention head only as an output of the first residual branch, data processing precision of the target neural network model for the target task is less than first processing precision, and the first processing precision is data processing precision of the target neural network model when the target neural network model is for performing the first operation on the output of the first attention head and the first weight value to obtain the first output and performing the second operation on the third output and the output of the second transformer layer;

when the target neural network model is for using an output of the target FFN only as an output of the second residual branch, data processing precision of the target neural network model for the target task is less than second processing precision, and the second processing precision is data processing precision of the target neural network model when the target neural network model is for performing a first operation on the output of the target FFN and the second weight value to obtain the output of the second residual branch; or

when the target neural network model is for using the output of the first attention head only as an output of the first residual branch and use an output of the target FFN as an output of the second residual branch, data processing precision of the target neural network model for the target task is less than third processing precision, and the third processing precision is data processing precision of the target neural network model when the target neural network model is for performing the first operation on the output of the first attention head and the first weight value to obtain the first output and performing the second operation on the third output and the output of the second transformer layer, and for performing a first operation on the output of the target FFN and the second weight value to obtain the output of the second residual branch and performing a first operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing a first operation on the output of the first attention head and the first initial weight value, and performing a second operation on an operation result and the output of the second transformer layer.

In a possible implementation, the second weight value is obtained by updating a second initial weight value when the target neural network model is trained for the target task. In a training process of the target neural network model, the target neural network model is for performing a first operation on the target FFN and the second initial weight value, and performing a second operation on an operation result and the output of the second transformer layer.

In a possible implementation, the obtaining a weight value corresponding to a target task includes: obtaining, based on a preset mapping relationship, the weight value corresponding to the target task, where the weight value corresponding to the target task includes the first weight value and/or the second weight value, and the preset mapping relationship includes a correspondence between a task and a weight value.

In a possible implementation, the obtaining a weight value corresponding to a target task includes:

inputting an identifier of the target task and at least one of the to-be-processed data and the output of the first attention head into a first neural network to obtain the first weight value; and/or

inputting an identifier of the target task and at least one of the to-be-processed data and the output of the target FFN into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, performing a first operation on an output of the first initial neural network and the output of the first attention head, and performing a second operation on an operation result and the output of the second transformer layer.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, performing a first operation on an output of the second initial neural network and the output of the target FFN, and performing a second operation on an operation result and the output of the second transformer layer.

In a possible implementation, the first transformer layer includes a plurality of attention heads. Each of the plurality of attention heads corresponds to a weight value. Correspondingly, the target neural network model is for performing a first operation on an output of each attention head and a corresponding weight value to obtain a third output, and performing a second operation on the third output and the output of the second transformer layer. Different attention heads correspond to different weight values.

In a possible implementation, the first operation includes a product operation, and the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a third aspect, this application provides a data processing method, including:

obtaining to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for performing a target operation on an output of the first attention head and a first initial weight value to obtain an output of the first residual branch, and/or the initial neural network model is for performing a target operation on an output of the target FFN and a second initial weight value to obtain an output of the second residual branch;

processing the to-be-processed data based on the initial neural network model to obtain a data processing result; and

obtaining a loss based on the data processing result and the correct data processing result, and updating the first initial weight value and/or the second initial weight value based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the obtaining a loss based on the data processing result and the correct data processing result, and updating the first initial weight value and/or the second initial weight value based on the loss to obtain a target neural network model includes:

obtaining the loss based on the data processing result and the correct data processing result, updating only the first initial weight value and/or the second initial weight value based on the loss in an $i^{th}$ iteration process to obtain the first neural network model, and updating a network parameter other than the first initial weight value and/or the second initial weight value in the first neural network model based on the loss in an $(i+1)^{th}$ iteration process to obtain the target neural network model.

According to a fourth aspect, this application provides a data processing method, including:

obtaining to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for inputting an identifier of the target task and the to-be-processed data and/or an output of the first attention head into a first initial neural network and perform a target operation on an output of the first initial neural network and the output of the first attention head to obtain an output of the first residual branch, and/or the initial neural network model is for inputting an identifier of the target task and the to-be-processed data and/or an output of the target FFN into a second initial neural network and perform a target operation on an output of the second initial neural network and the output of the target FFN to obtain an output of the second residual branch;

processing the to-be-processed data based on the initial neural network model to obtain a data processing result; and

obtaining a loss based on the data processing result and the correct data processing result, and updating the first initial neural network and/or the second initial neural network based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the obtaining a loss based on the data processing result and the correct data processing result, and updating the first initial neural network and/or the second initial neural network based on the loss to obtain the target neural network model includes:
obtaining the loss based on the data processing result and the correct data processing result, updating only the first initial neural network and/or the second initial neural network based on the loss in an $i^{th}$ iteration process to obtain the first neural network model, and updating a network parameter other than the first initial neural network and/or the second initial neural network in the first neural network model based on the loss in an $(i+1)^{th}$ iteration process to obtain the target neural network model.

According to a fifth aspect, this application provides a data processing method. The method includes:

obtaining to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for performing a first operation on an output of the first attention head and a first weight value to obtain a first output and perform a second operation on the first output and an output of the second transformer layer, and/or the initial neural network model is for performing a first operation on the target FFN and the second weight value to obtain a second output and perform a second operation on the second output and an output of the second transformer layer;

processing the to-be-processed data based on a target neural network model to obtain a data processing result; and

obtaining a loss based on the data processing result and the correct data processing result, and updating a first initial weight value and/or a second initial weight value based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the obtaining a loss based on the data processing result and the correct data processing result, and updating a first initial weight value and/or a second initial weight value based on the loss to obtain the target neural network model includes:
obtaining the loss based on the data processing result and the correct data processing result, updating only the first initial weight value and/or the second initial weight value based on the loss in an $i^{th}$ iteration process to obtain the first neural network model, and updating a network parameter other than the first initial weight value and/or the second initial weight value in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a sixth aspect, this application provides a data processing method. The method includes:

obtaining to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for inputting an identifier of the target task and the to-be-processed data and/or an output of the first attention head into a first initial neural network, performing a first operation on an output of the first initial neural network and the output of the first attention head, and performing a second operation on an operation result and an output of the second transformer layer, and/or the initial neural network model is for inputting an identifier of the target task and the to-be-processed data and/or an output of the target FFN into a second initial neural network, performing a first operation on an output of the second initial neural network and the output of the target FFN, and performing a second operation on an operation result and an output of the second transformer layer;

processing the to-be-processed data based on a target neural network model to obtain a data processing result; and

obtaining a loss based on the data processing result and the correct data processing result, and updating the first initial neural network and/or the second initial neural network based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the obtaining a loss based on the data processing result and the correct data processing result, and updating the first initial neural network and/or the second initial neural network based on the loss to obtain the target neural network model includes:

obtaining the loss based on the data processing result and the correct data processing result, updating only the first initial neural network and/or the second initial neural network based on the loss in an $i^{th}$ iteration process to obtain the first neural network model, and updating a network parameter other than the first initial neural network and/or the second initial neural network in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a seventh aspect, this application provides a data processing apparatus. The apparatus includes:

an obtaining module, configured to: obtain to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN; and obtain a weight value corresponding to a target task, where the weight value includes a first weight value corresponding to the first attention head and/or a second weight value corresponding to the target FFN; and

a data processing module, configured to process the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch.

In a possible implementation, when the target neural network model is for using the output of the first attention head as the output of the first residual branch, data processing precision of the target neural network model for the target task is less than first processing precision, and the first processing precision is data processing precision of the target neural network model when the target neural network model is for performing the target operation on the output of the first attention head and the first weight value to obtain the output of the first residual branch;

when the target neural network model is for using the output of the target FFN as the output of the second residual branch, data processing precision of the target neural network model for the target task is less than second processing precision, and the second processing precision is data processing precision of the target neural network model when the target neural network model is for performing the target operation on the output of the target FFN and the second weight value to obtain the output of the second residual branch; or
when the target neural network model is for using the output of the target FFN as the output of the second residual branch and using the output of the target FFN as the output of the second residual branch, data processing precision of the target neural network model for the target task is less than third processing precision, and the third processing precision is data processing precision of the target neural network model when the target neural network model is for performing the target operation on the output of the target FFN and the second weight value to obtain the output of the second residual branch and for performing the target operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing the target operation on the output of the first attention head and the first initial weight value to obtain the output of the first residual branch.

In a possible implementation, the second weight value is obtained by updating a second initial weight value when the target neural network model is trained for the target task. In a training process of the target neural network model, the target neural network model is for performing the target operation on the output of the target FFN and the second initial weight value to obtain the output of the second residual branch.

In a possible implementation, the obtaining module is configured to:
obtain, based on a preset mapping relationship, the weight value corresponding to the target task, where the weight value corresponding to the target task includes the first weight value and/or the second weight value, and the preset mapping relationship includes a correspondence between a task and a weight value.

In a possible implementation, the obtaining module is configured to:

input an identifier of the target task and at least one of the to-be-processed data and the output of the first attention head into a first neural network to obtain the first weight value; and/or
input an identifier of the target task and at least one of the to-be-processed data and the output of the target FFN into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, and performing a target operation on an output of the first initial neural network and the output of the first attention head to obtain the output of the first residual branch.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, and performing a target operation on an output of the second initial neural network and the output of the target FFN to obtain the output of the second residual branch.

In a possible implementation, the first transformer layer includes a plurality of attention heads. Each of the plurality of attention heads corresponds to a weight value. The target neural network model is for performing a target operation on an output of each attention head and a corresponding weight value to obtain the output of the first residual branch. Different attention heads correspond to different weight values.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to an eighth aspect, this application provides a data processing apparatus. The apparatus includes:

an obtaining module, configured to: obtain to-be-processed data and a target neural network model, where the target neural network model includes a first transformer layer and a second transformer layer, and the first transformer layer includes a first attention head and a target FFN; and obtain a weight value corresponding to a target task, where the weight value includes a first weight value corresponding to the first attention head and/or a second weight value corresponding to the target FFN; and a data processing module, configured to process the to-be-processed data based on the target neural network model to obtain a data processing result, where the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer.

In a possible implementation, the target neural network model includes a plurality of transformer layers and an output layer. The second transformer layer is a transformer layer that is in the plurality of transformer layers and that is closest to the output layer.

In a possible implementation, the first transformer layer includes a first residual branch and a second residual branch. The first residual branch includes the first attention head. The second residual branch includes the target FFN.

When the target neural network model is for using the output of the first attention head only as an output of the first residual branch, data processing precision of the target neural network model for the target task is less than first processing precision, and the first processing precision is data processing precision of the target neural network model when the target neural network model is for performing the first operation on the output of the first attention head and the first weight value to obtain the first output and performing the second operation on the third output and the output of the second transformer layer;

when the target neural network model is for using an output of the target FFN only as an output of the second residual branch, data processing precision of the target neural network model for the target task is less than second processing precision, and the second processing precision is data processing precision of the target neural network model when the target neural network model is for performing a first operation on the output of the target FFN and the second weight value to obtain the output of the second residual branch; or
when the target neural network model is for using the output of the first attention head only as an output of the first residual branch and use an output of the target FFN as an output of the second residual branch, data processing precision of the target neural network model for the target task is less than third processing precision, and the third processing precision is data processing precision of the target neural network model when the target neural network model is for performing the first operation on the output of the first attention head and the first weight value to obtain the first output and performing the second operation on the third output and the output of the second transformer layer, and for performing a first operation on the output of the target FFN and the second weight value to obtain the output of the second residual branch and performing a first operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing a first operation on the output of the first attention head and the first initial weight value, and performing a second operation on an operation result and the output of the second transformer layer.

In a possible implementation, the second weight value is obtained by updating a second initial weight value when the target neural network model is trained for the target task. In a training process of the target neural network model, the target neural network model is for performing a first operation on the target FFN and the second initial weight value, and performing a second operation on an operation result and the output of the second transformer layer.

In a possible implementation, the obtaining module is configured to:

obtain, based on a preset mapping relationship, the weight value corresponding to the target task, where the weight value corresponding to the target task includes the first weight value and/or the second weight value, and the preset mapping relationship includes a correspondence between a task and a weight value.

In a possible implementation, the obtaining module is configured to:

input an identifier of the target task and at least one of the to-be-processed data and the output of the first attention head into a first neural network to obtain the first weight value; and/or
input an identifier of the target task and at least one of the to-be-processed data and the output of the target FFN into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, performing a first operation on an output of the first initial neural network and the output of the first attention head, and performing a second operation on an operation result and the output of the second transformer layer.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, performing a first operation on an output of the second initial neural network and the output of the target FFN, and performing a second operation on an operation result and the output of the second transformer layer.

In a possible implementation, the first transformer layer includes a plurality of attention heads. Each of the plurality of attention heads corresponds to a weight value. Correspondingly, the target neural network model is for performing a first operation on an output of each attention head and a corresponding weight value to obtain a third output, and performing a second operation on the third output and the output of the second transformer layer. Different attention heads correspond to different weight values.

In a possible implementation, the first operation includes a product operation, and the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a ninth aspect, this application provides a data processing apparatus, including:

an obtaining module, configured to obtain to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for performing a target operation on an output of the first attention head and a first initial weight value to obtain an output of the first residual branch, and/or the initial neural network model is for performing a target operation on an output of the target FFN and a second initial weight value to obtain an output of the second residual branch;

a data processing module, configured to process the to-be-processed data based on the initial neural network model to obtain a data processing result; and

a model update module, configured to obtain a loss based on the data processing result and the correct data processing result, and update the first initial weight value and/or the second initial weight value based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the model update module is configured to: obtain the loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model.

According to a tenth aspect, this application provides a data processing apparatus, including:

an obtaining module, configured to obtain to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for inputting an identifier of the target task and the to-be-processed data and/or an output of the first attention head into a first initial neural network and perform a target operation on an output of the first initial neural network and the output of the first attention head to obtain an output of the first residual branch, and/or the initial neural network model is for inputting an identifier of the target task and the to-be-processed data and/or an output of the target FFN into a second initial neural network and perform a target operation on an output of the second initial neural network and the output of the target FFN to obtain an output of the second residual branch;

a data processing module, configured to process the to-be-processed data based on the initial neural network model to obtain a data processing result; and

a model update module, configured to obtain a loss based on the data processing result and the correct data processing result, and update the first initial neural network and/or the second initial neural network based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the model update module is configured to: obtain the loss based on the data processing result and the correct data processing result, update only the first initial neural network and/or the second initial neural network based on the loss in an $i^{th}$ iteration process to obtain the first neural network model, and update a network parameter other than the first initial neural network and/or the second initial neural network in the first neural network model based on the loss in an $(i+1)^{th}$ iteration process to obtain the target neural network model.

According to an eleventh aspect, this application provides a data processing apparatus. The apparatus includes:

an obtaining module, configured to obtain to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for performing a first operation on an output of the first attention head and a first weight value to obtain a first output and perform a second operation on the first output and an output of the second transformer layer, and/or the initial neural network model is for performing a first operation on the target FFN and the second weight value to obtain a second output and perform a second operation on the second output and an output of the second transformer layer;

a data processing module, configured to process the to-be-processed data based on a target neural network model to obtain a data processing result; and

a model update module, configured to obtain a loss based on the data processing result and the correct data processing result, and update a first initial weight value and/or a second initial weight value based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the model update module is configured to: obtain the loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a twelfth aspect, this application provides a data processing apparatus. The apparatus includes:

an obtaining module, configured to obtain to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for inputting an identifier of the target task and the to-be-processed data and/or an output of the first attention head into a first initial neural network, performing a first operation on an output of the first initial neural network and the output of the first attention head, and performing a second operation on an operation result and an output of the second transformer layer, and/or the initial neural network model is for inputting an identifier of the target task and the to-be-processed data and/or an output of the target FFN into a second initial neural network, performing a first operation on an output of the second initial neural network and the output of the target FFN, and performing a second operation on an operation result and an output of the second transformer layer;

a data processing module, configured to process the to-be-processed data based on a target neural network model to obtain a data processing result; and

a model update module, configured to obtain a loss based on the data processing result and the correct data processing result, and update the first initial neural network and/or the second initial neural network based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the model update module is configured to: obtain the loss based on the data processing result and the correct data processing result, update only the first initial neural network and/or the second initial neural network based on the loss in an $i^{th}$ iteration process to obtain the first neural network model, and update a network parameter other than the first initial neural network and/or the second initial neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

According to a thirteenth aspect, an embodiment of this application provides an execution device. The execution device may include a memory, a processor, and a bus system. The memory is configured to store a program. The processor is configured to execute the program in the memory, to perform the method in the first aspect and any optional design of the first aspect and the method in the second aspect and any optional design of the second aspect.

According to a fourteenth aspect, an embodiment of this application provides a training device. The training device may include a memory, a processor, and a bus system. The memory is configured to store a program. The processor is configured to execute the program in the memory, to perform the method in the third aspect to the sixth aspect and any optional design of the third aspect to the sixth aspect.

According to a fifteenth aspect, an embodiment of this application provides a computer-readable storage medium. The computer-readable storage medium stores a computer program. When the computer program is run on a computer, the computer is enabled to perform the method in the first aspect to the sixth aspect and any optional design of the first aspect to the sixth aspect.

According to a sixteenth aspect, an embodiment of this application provides a computer program. When the computer program is run on a computer, the computer is enabled to perform the method in the first aspect to the sixth aspect and any optional design of the first aspect to the sixth aspect.

According to a seventeenth aspect, this application provides a chip system. The chip system includes a processor, configured to support an execution device or a training device to implement a function in the foregoing aspects, for example, send or process data or information in the foregoing methods. In a possible design, the chip system further includes a memory. The memory is configured to store program instructions and data that are necessary for the execution device or the training device. The chip system may include a chip, or may include a chip and another discrete component.

An embodiment of this application provides a data processing method. The method includes: obtaining to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN; obtaining a weight value corresponding to a target task, where the weight value includes a first weight value corresponding to the first attention head and/or a second weight value corresponding to the target FFN; and performing target task related processing on the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch. Weight values for controlling an output of a residual branch are set for different tasks, which is equivalent to that a dedicated distributed representation combination of weight values may be set for each task, to implement multi-task learning of the target neural network model. In addition, in this embodiment, compared with adding a neural network adaptive to different tasks at an output layer, fewer parameters need to be learned, so that a computing resource requirement of a terminal device for running the target neural network model can be lowered.

**BRIEF DESCRIPTION OF DRAWINGS**

FIG. 1 is a schematic diagram of a structure of an artificial intelligence main framework;
FIG. 2 shows a natural language processing system;
FIG. 3 shows another natural language processing system;
FIG. 4 is a schematic diagram of a device related to natural language processing according to an embodiment of this application;
FIG. 5 is a schematic diagram of an architecture of a transformer layer;
FIG. 6 is a schematic diagram of an embodiment of a data processing method according to an embodiment of this application;
FIG. 7 is a schematic diagram of a structure of a neural network model according to an embodiment of this application;
FIG. 8 is a schematic diagram of a structure of a transformer layer;
FIG. 9 is a schematic diagram of an operation of an attention head (head);
FIG. 10 is a schematic diagram of a structure of a neural network model according to an embodiment of this application;
FIG. 11 is a schematic diagram of a structure of a neural network model according to an embodiment of this application;
FIG. 12 is a schematic diagram of a structure of a neural network model according to an embodiment of this application;
FIG. 13 is a schematic diagram of an embodiment of a data processing method according to an embodiment of this application;
FIG. 14 is a schematic diagram of a structure of a neural network model according to an embodiment of this application;
FIG. 15 is a schematic diagram of a structure of a data processing device according to an embodiment of this application;
FIG. 16 is a schematic diagram of a structure of a data processing device according to an embodiment of this application;
FIG. 17 is a schematic diagram of a structure of a data processing device according to an embodiment of this application;
FIG. 18 is a schematic diagram of a structure of a data processing device according to an embodiment of this application;
FIG. 19 is a schematic diagram of a structure of a data processing device according to an embodiment of this application;
FIG. 20 is a schematic diagram of a structure of a data processing device according to an embodiment of this application;
FIG. 21 is a schematic diagram of a structure of an execution device according to an embodiment of this application;
FIG. 22 is a schematic diagram of a structure of a training device according to an embodiment of this application; and
FIG. 23 is a schematic diagram of a structure of a chip according to an embodiment of this application.

**DESCRIPTION OF EMBODIMENTS**

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that the technical solutions provided in embodiments of this application are also applicable to a similar technical problem as a technology develops and a new scenario emerges.

In the description, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

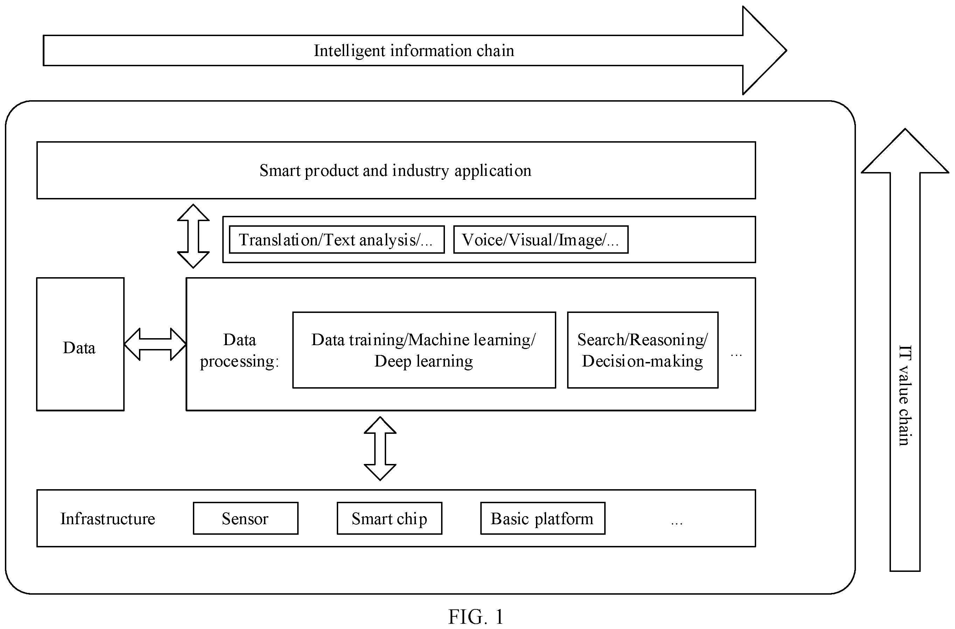

An overall working procedure of an artificial intelligence system is first described. Refer to FIG. 1. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data from a higher layer of the infrastructure indicates a data source in the artificial intelligence field. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process of deciding after intelligent information inference, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

The smart product and the industry application are a product and an application of the artificial intelligence system in various fields, and are package of an overall solution of the artificial intelligence, so that decision-making for intelligent information is productized and an application is implemented. Application fields mainly include a smart terminal, smart transportation, smart health care, autonomous driving, a safe city, and the like.

This application may be applied to a natural language processing field in the artificial intelligence field. The following describes a plurality of application scenarios in which a plurality of applications are implemented in a product.

To better understand the solutions in embodiments of this application, the following briefly describes a possible application scenario in embodiments of this application with reference to FIG. 1 to FIG. 3.

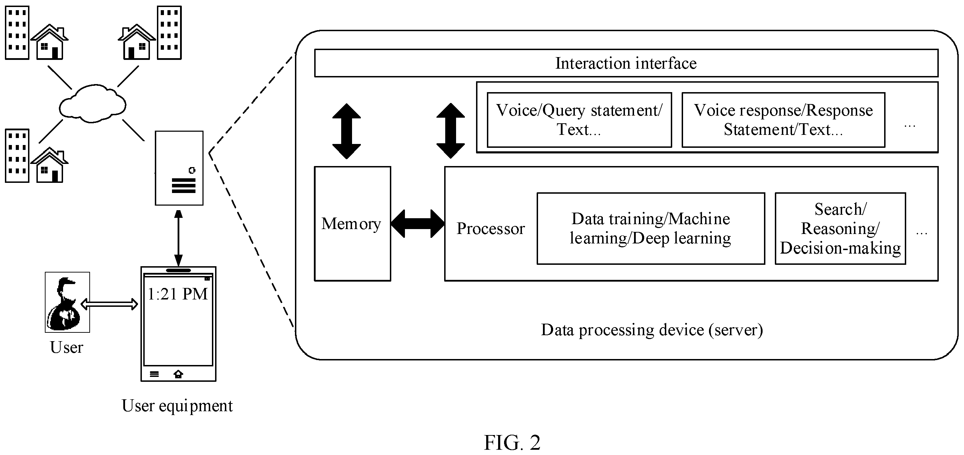

FIG. 2 shows a natural language processing system. The natural language processing system includes user equipment and a data processing device. The user equipment includes a smart terminal such as a mobile phone, a personal computer, or an information processing center. The user equipment is an initiating end of natural language data processing. As an initiator of a request for language questioning and answering, querying, or the like, a user usually initiates the request by using the user equipment.

The data processing device may be a device or a server with a data processing function, such as a cloud server, a network server, an application server, or a management server. The data processing device receives, through an interaction interface, a question such as a query statement/voice/text from the intelligent terminal; then performs, by using a memory storing data and a processor processing data, language data processing in a manner of machine learning, deep learning, searching, inference, decision-making, or the like; and feeds back a processing result to the user equipment. The memory in the data processing device may be a general name, including a local storage and a database storing historical data. The database may be in the data processing device, or may be in another network server.

In the natural language processing system shown in FIG. 2, the user equipment may receive an instruction of the user. For example, the user equipment may receive a piece of text entered by the user, and then initiate a request to the data processing device, so that the data processing device executes a natural language processing application (for example, text classification, text inference, named entity recognition, or translation) on the piece of text obtained by the user equipment, to obtain a processing result (for example, a classification result, an inference result, a named entity recognition result, or a translation result) of a corresponding natural language processing application for the piece of text. For example, the user equipment may receive a piece of Chinese text entered by the user, and then initiate a request to the data processing device, so that the data processing device performs entity classification on the piece of Chinese text, to obtain an entity classification result for the piece of Chinese text. For example, the user equipment may receive a piece of Chinese text entered by the user, and then initiate a request to the data processing device, so that the data processing device translates the piece of Chinese text into English, to obtain an English translation for the piece of Chinese text.

In this embodiment of this application, the data processing device may receive, through the interaction interface, a request for obtaining a task model related to natural language processing (natural language processing, NLP) and a performance upper limit parameter from the user equipment. The performance upper limit parameter includes but is not limited to at least one of precision, a latency, or a model compression ratio. The data processing device may calculate, based on a trained scalable transformer model and a performance upper limit parameter that needs to be met and that is uploaded by the user equipment, a size of a model suitable for the user equipment when the size of the model is met, extract a subnetwork of the size, and send the subnetwork to the user equipment.

In FIG. 2, the data processing device may perform the data processing method in embodiments of this application.

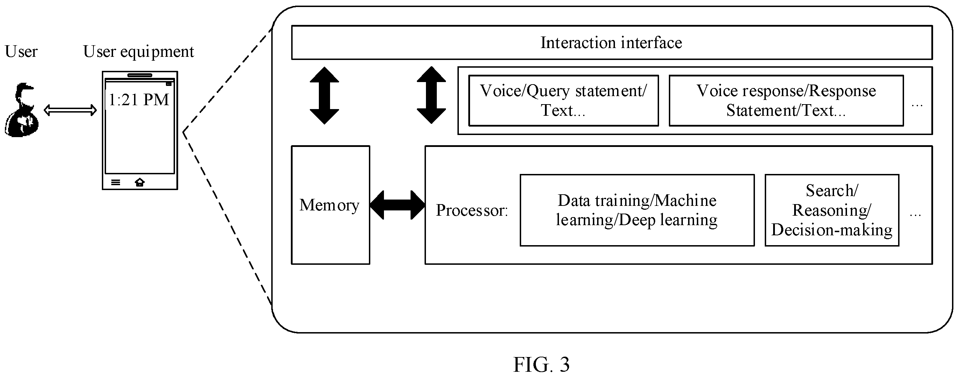

FIG. 3 shows another natural language processing system. In FIG. 3, user equipment is directly used as a data processing device. The user equipment can directly receive an input from a user, and the input is directly processed by using hardware of the user equipment. A specific process is similar to that in FIG. 2. Refer to the foregoing descriptions, and details are not described herein again.

In the natural language processing system shown in FIG. 3, the user equipment may receive an instruction of the user. For example, the user equipment may receive a piece of text entered by the user, and then the user equipment executes a natural language processing application (for example, text classification, text inference, named entity recognition, or translation) on the piece of text, to obtain a processing result (for example, a classification result, an inference result, a named entity recognition result, or a translation result) of a corresponding natural language processing application for the piece of text. For example, the user equipment may receive a piece of Chinese text entered by the user, and perform entity classification on the piece of Chinese text, to obtain an entity classification result for the piece of Chinese text. For example, the user equipment may receive a piece of Chinese text entered by the user, and translate the piece of Chinese text into English, to obtain an English translation for the piece of Chinese text.

In this embodiment of this application, the user equipment may store a subnetwork model, calculate, based on a current resource condition of the user equipment (including but not limited to at least one of current power consumption, a computing capability, and a storage parameter of an edge device), a size of a model that meets the current resource condition of the user equipment each time before an operating system (operating system, OS) or an application (application, APP) invokes the model, and input a size of an appropriate model obtained through calculation to the stored subnetwork model to obtain a current state model after dynamic cropping and execute an inference task.

In FIG. 3, the user equipment may perform the data processing method in embodiments of this application.

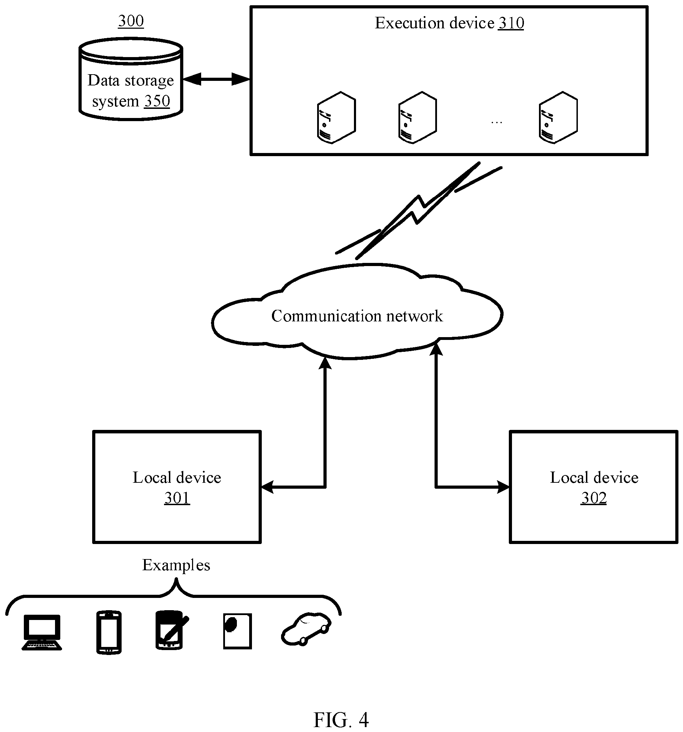

FIG. 4 is a schematic diagram of a device 300 related to natural language processing according to an embodiment of this application.

The user equipment in FIG. 2 and FIG. 3 may be specifically a local device 301 or a local device 302 in FIG. 4, and the data processing device in FIG. 2 may be specifically an execution device 310 in FIG. 4. A data storage system 350 may store data to be processed by the execution device 310. The data storage system 350 may be integrated into the execution device 310, or may be disposed on a cloud or another network server.

The processor in FIG. 2 and FIG. 3 may perform data training/machine learning/deep learning by using a neural network model or another model, and execute a natural language processing application (for example, text classification, sequence labeling, reading comprehension, text generation, text inference, or translation) on a text sequence by using a model obtained through final data training or learning, to obtain a corresponding processing result.

Because embodiments of this application relate to massive application of a neural network, for ease of understanding, the following first describes terms and concepts related to the neural network in embodiments of this application.

(1) Neural network

The neural network may include a neuron. The neuron may be an operation unit that uses $x_s$ and an intercept of 1 as an input. An output of the operation unit may be:

Herein, s = 1, 2, ..., or n, n is a natural number greater than 1, $W_s$ is a weight of $x_s$, b is a bias of the neuron, and f is an activation function (activation function) of the neuron, and is used for introducing a non-linear characteristic into the neural network, to convert an input signal in the neuron into an output signal. The output signal of the activation function may be used as an input of a next-layer convolutional layer. The activation function may be a sigmoid function. The neural network is a network constituted by connecting a plurality of single neurons together. To be specific, an output of a neuron may be an input to another neuron. An input to each neuron may be connected to a local receptive field of a previous layer to extract a feature of the local receptive field. The local receptive field may be a region including several neurons.

(2) Transformer layer

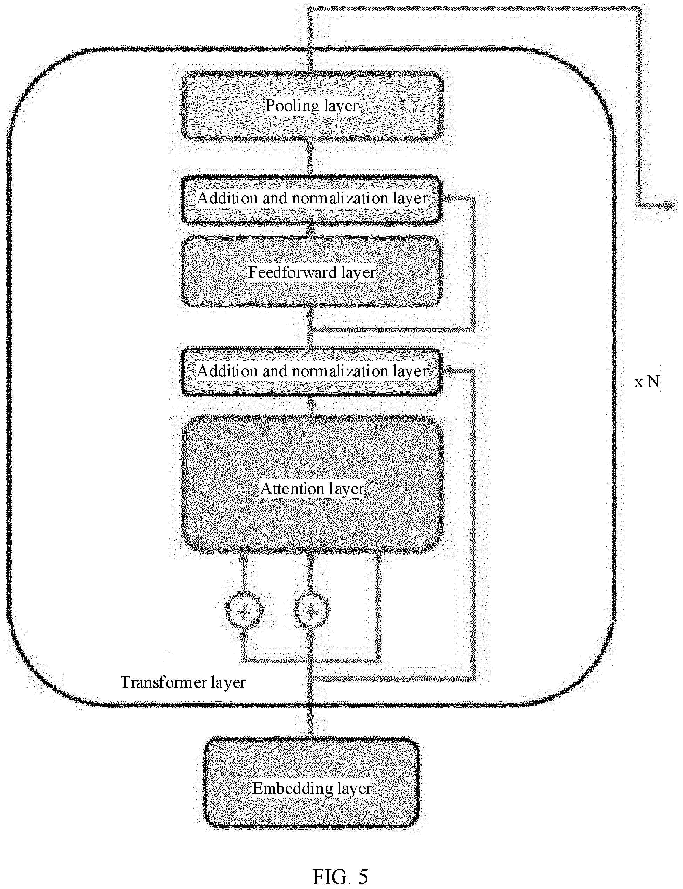

FIG. 5 is a schematic diagram of an architecture of a transformer layer. As shown in FIG. 5, a neural network includes an embedding layer and at least one transformer layer. The at least one transformer layer may be N transformer layers (N is an integer greater than 0), and each transformer layer includes an attention layer, an addition and normalization (add & norm) layer, a feedforward (feedforward) layer, and an addition and normalization layer that are sequentially adjacent to each other. At the embedding layer, embedding processing is performed on a current input to obtain a plurality of feature vectors. At the attention layer, P input vectors are obtained from a previous layer of the first transformer layer. An intermediate vector corresponding to any first input vector is obtained by using the first input vector in the P input vectors as a center and based on an association degree between each input vector within a preset attention window range and the first input vector. In this way, P intermediate vectors corresponding to the P input vectors are determined. At the pooling layer, the P intermediate vectors are merged into Q output vectors, where a plurality of output vectors obtained from a last transformer layer of the transformer layer are used as feature representations of the current input.

The following describes the foregoing steps in detail with reference to specific examples.

First, at the embedding layer, embedding processing is performed on the current input to obtain the plurality of feature vectors.

The embedding layer may be referred to as an input embedding (input embedding) layer. The current input may be a text input, for example, may be a piece of text, or may be a sentence. The text may be Chinese text, or may be English text, or may be text in another language. After the current input is obtained at the embedding layer, embedding processing may be performed on each word in the current input, to obtain a feature vector of the word. In some embodiments, as shown in FIG. 1, the embedding layer includes an input embedding layer and a positional encoding (positional encoding) layer. At the input embedding layer, word embedding processing may be performed on each word in the current input, to obtain a word embedding vector of the word. At the positional encoding layer, a position of each word in the current input may be obtained, to generate a position vector for the position of each word. In some examples, the position of each word may be an absolute position of the word in the current input. For example, the current input is "what date should the ant credit pay be paid back", where a position of "what" may be represented as a first position, and a position of "date" may be represented as a second position, .... In some examples, the position of each word may be a relative position between the words. An example in which the current input is "what date should the ant credit pay be paid back" is still used. The position of "what" may be represented as before "date", and the position of "date" may be represented as after "what", before "should", .... When the word embedding vector and the position vector of each word in the current input are obtained, the position vector of each word and the corresponding word embedding vector may be combined to obtain a feature vector of each word, in other words, obtain the plurality of feature vectors corresponding to the current input. The plurality of feature vectors may be represented as an embedding matrix with a preset dimension. A quantity of feature vectors in the plurality of feature vectors may be set to M, and the preset dimension is an H dimension. In this case, the plurality of feature vectors may be represented as an M x H embedding matrix.

Second, the P input vectors are obtained from the previous layer of the first transformer layer. The intermediate vector corresponding to the any first input vector is obtained by using the first input vector in the P input vectors as a center and based on the association degree between each input vector within the preset attention window range and the first input vector. In this way, the P intermediate vectors corresponding to the P input vectors are determined. The attention layer may also be referred to as a multi-head attention (multi-head attention) layer.

In an example, the attention layer may be a fixed window multi-headed attention (fixed window multi-head attention) layer.

In some embodiments, the first transformer layer may be a next layer of the embedding layer, and the P input vectors are the plurality of feature vectors obtained from the embedding layer. In some embodiments, the at least one transformer layer in the neural network provided in this embodiment of this specification further includes a second transformer layer. If the second transformer layer is the previous layer of first self-attention, the P input vectors are P output vectors output from the second transformer layer. At the last transformer layer in the neural network, the plurality of output vectors obtained through the foregoing steps may be used as the feature representations of the current input. The feature representation is a feature representation suitable for computer processing of the current input, and may be used for tasks such as text similarity, text classification, reading comprehension, and machine translation.

(3) Attention mechanism (attention mechanism)

The attention mechanism simulates an internal process of biological observation behavior, and is a mechanism that aligns internal experience with external feeling to increase observation precision of some regions. The mechanism can quickly select high-value information from a large amount of information by using limited attention resources. The attention mechanism is widely used in natural language processing tasks, especially machine translation, because the attention mechanism can quickly extract an important feature of sparse data. A self-attention mechanism (self-attention mechanism) is improvement of the attention mechanism. The self-attention mechanism becomes less dependent on external information and is better at capturing an internal correlation of data or features. An essential idea of the attention mechanism can be expressed by the following formula:

$Lx=\|Source\|$ represents a length of a source. A meaning of the formula is that constituent elements in the source are considered to be constituted by a series of data pairs. In this case, given an element Query in a target (Target), a weight coefficient of a value corresponding to each key is obtained by calculating similarity or a correlation between Query and the key, and then weighted summation is performed on values to obtain a final attention value. Therefore, in essence, the attention mechanism is to perform weighted summation on values of the elements in the source, where Query and a key are used to calculate a weight coefficient of a corresponding value. Conceptually, the attention mechanism can be understood as a mechanism for selecting a small amount of important information from a large amount of information and focusing on the important information, and ignoring most unimportant information. A focusing process is reflected in calculation of a weight coefficient. A larger weight indicates that a value corresponding to the weight is more focused. In other words, the weight indicates importance of information, and the value indicates the information corresponding to the weight. The self-attention mechanism may be understood as an intra attention (intra attention) mechanism. The attention mechanism occurs between the element Query in the target and all elements in the source. The self-attention mechanism is an attention mechanism that occurs between elements in the source or between elements in the target, and may also be understood as an attention calculation mechanism in a special case of Target = Source. A specific calculation process of the self-attention mechanism is the same except that a calculation object changes.

(4) Natural language processing (natural language processing, NLP)

Natural language (natural language) is human language, and natural language processing (NLP) is processing of human language. Natural language processing is a process of systematic analysis, understanding, and information extraction of text data in an intelligent and efficient manner. By using NLP and components of NLP, large chunks of text data can be managed, or a lot of automated tasks can be performed, and various problems can be resolved, for example, automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), a question answering (question answering) system, and topic segmentation.

For example, there may be the following types of natural language processing tasks.

Sequence labeling: A model needs to provide a classification category for each word in a sentence based on a context. For example, the sequence labeling is Chinese word segmentation, part-of-speech tagging, named entity recognition, or semantic role tagging.

Classification task: A classification value is output for the entire sentence. For example, the classification task is text classification.

Sentence relation inference: Two sentences are given, and whether the two sentences have a nominal relation is determined. For example, the sentence relation inference is entailment, QA, semantic rewriting, or natural language inference.

Generative task: One piece of text is output and another piece of text is generated. For example, the generative task is machine translation, text summarization, writing poems and sentences, describing a picture orally.

The following provides some natural language processing examples.

Word segmentation (word segmentation or word breaker, WB): Continuous natural language text is segmented into lexical sequences with semantic rationality and integrity, to eliminate a cross ambiguity. Example sentence: zhi bi ye he shang wei bi ye de tong xue. Word segmentation 1: zhi biye he shangwei biye de tongxue. Word segmentation 2: zhi biye heshang wei biye de tongxue.

Named entity recognition (named entity recognition, NER): Entities (person, place, institution, time, works, and the like) having specific meanings in natural language text are recognized, to integrate unknown words at a granularity. Example sentence: tian shi ai mei li zai xian guan kan. Word segmentation: tianshi ai meili zaixian guankan. Entity: Angel Amelie -> Movie.

Part-of-speech tagging (part-of-speech tagging): A part-of-speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity. Comment: fang jian li hai ke yi xin shang ri chu. Ambiguity 1: fang jian hai ke yi. Ambiguity 2: ke yi xin shang ri chu. Part of speech: fang jian li (subject), hai ke yi (predicate), xin shang ri chu (verb-object phrase).

Word vector and semantic similarity (word embedding & semantic similarity): Words are represented in a vectorized manner, and semantic similarity calculation is performed on the words based on the vectorized representation, to resolve a problem of linguistic similarity between the words. For example, which one (dai gua/cao mei) does xi gua approximate? Vectorized representation: xi gua (0.1222, 0.22333, ...); similarity calculation: dai gua (0.115) and cao mei (0.325); and vectorized representation: (-0.333, 0.1223, ...) (0.333, 0.3333, ...).

Text semantic similarity (text semantic similarity): Based on massive data in the entire network and a deep neural network technology, semantic similarity between texts is calculated, to resolve a problem of text semantic similarity. For example, which one (qian pai zhao zen me zhuang/ru he ban li Beijing pai zhao) does che tou ru he fang zhi che pai approximate? Vectorized representation: che tou ru he fang zhi che pai (0.1222, 0.22333, ...); similarity calculation: qian pai zhao zen me zhuang (0.762) and ru he ban li Beijing pai zhao (0.486); and vectorized representation: (-0.333, 0.1223, ...) (0.333, 0.3333, ...).

The data processing method provided in embodiments of this application relates to natural language text processing, and may be specifically applied to data processing methods such as data training, machine learning, and deep learning. Symbolized and formalized intelligent information modeling, extraction, preprocessing, training, and the like are performed on training data, to finally obtain a trained target neural network model. In addition, in the data processing method provided in embodiments of this application, the foregoing trained target neural network model may be used to input input data (for example, to-be-processed language information) into the trained target neural network model, to obtain output data (for example, a processing result corresponding to a target task). It should be noted that a target neural network related model training method and the data processing method provided in embodiments of this application are inventions generated based on a same idea, and may alternatively be understood as two parts in a system or two phases of an overall process, for example, a model training phase and a model application phase.

The data processing method provided in embodiments of this application is first described by using the model training phase as an example.

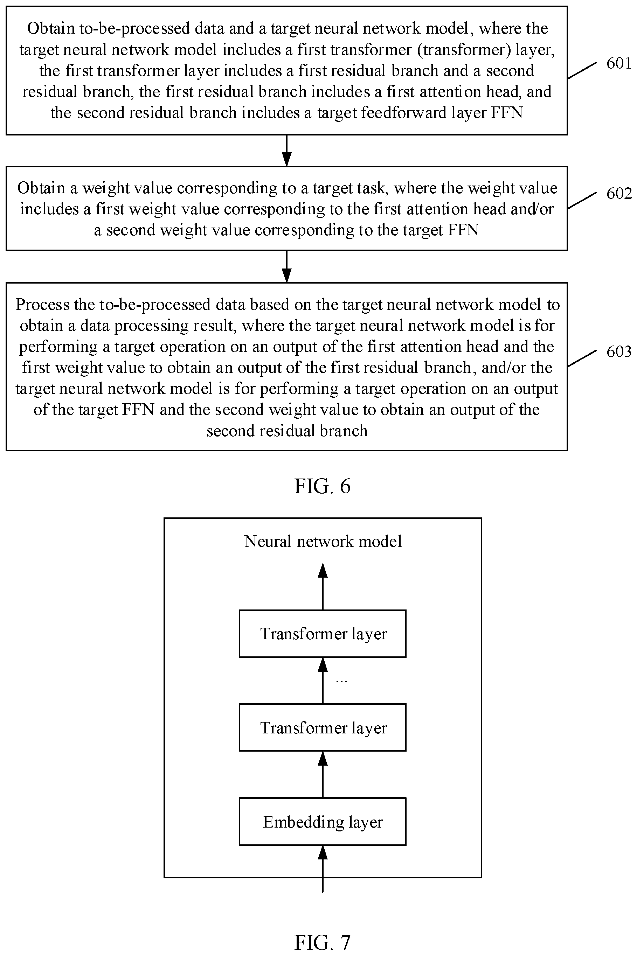

FIG. 6 is a schematic diagram of an embodiment of a data processing method according to an embodiment of this application. The data processing method provided in this embodiment of this application may be applied to a terminal device such as a mobile phone, a tablet computer, a notebook computer, or an intelligent wearable device. As shown in FIG. 6, the data processing method provided in this embodiment of this application includes the following steps.

601: Obtain to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN.

In this embodiment of this application, the terminal device may obtain the to-be-processed data and the target neural network model. The to-be-processed data may be text data. The target neural network model may be a trained transformer model that can perform multi-task processing.

In this embodiment of this application, the target neural network model may include the first transformer layer. In other words, the target neural network model may be a neural network model based on the transformer layer. Optionally, the target neural network model may be an NLP model based on the transformer layer.

The following describes an example structure of the target neural network model.

FIG. 7 is a schematic diagram of a structure of a neural network model according to an embodiment of this application. The neural network model shown in FIG. 7 may be the target neural network model in this embodiment of this application. As shown in FIG. 7, the target neural network model may include a plurality of transformer layers and an embedding layer that are sequentially connected. As understood by a person skilled in the art, a transformer model is mostly used for executing a natural language processing NLP task. It should be understood that the structure in FIG. 7 is merely an example, and a quantity of transformer layers may be set as required. For example, only one transformer layer may be set, or more transformer layers may be set. The neural network model determines, based on N output vectors obtained by transformer layers, feature vectors corresponding to a current node.

The following describes a specific working process of each layer.

At the embedding layer, embedding processing is performed on a current input, to obtain a plurality of feature vectors. A core feature of the transformer model is a unique attention mechanism used by the transformer model. When a natural language, for example, a sentence, is processed, the transformer model uses the attention mechanism to assign different attention coefficients to word vectors in the sentence, to more comprehensively consider impact of a context in the sentence on words. At the embedding layer, N embedding vectors $X_l$ are obtained based on a node feature and position encoding of each node in a current sequence. An attention layer is connected to the embedding layer, and the N embedding vectors are obtained from the embedding layer as input vectors. The input vectors are aggregated based on association degrees between the N input vectors to obtain N output vectors, and the N output vectors are output to a subsequent transformer layer. A transformer layer obtains an output of a previous layer as an input vector and performs an operation similar to that of the previous transformer layer.

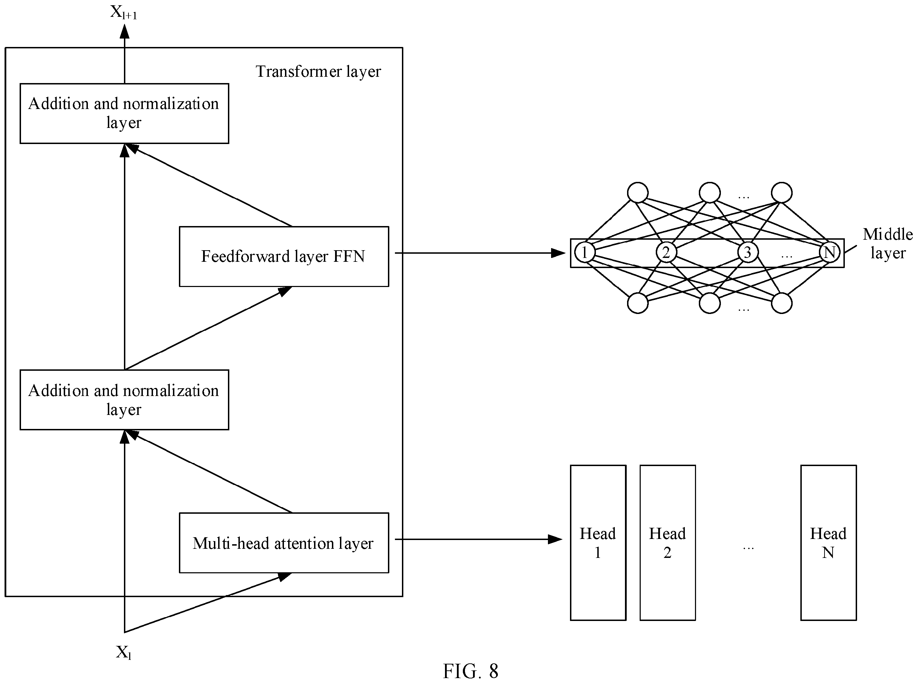

FIG. 8 is a schematic diagram of a structure of a transformer layer. For transformer layers (for example, the first transformer layer and the second transformer layer in this embodiment) of neural networks in embodiments of this application, refer to the structure shown in FIG. 8. As shown in FIG. 8, the transformer layer includes a multi-head attention layer, an addition and normalization (add & norm) layer, a feedforward (feedforward) layer, and an addition and normalization layer that are sequentially adjacent to each other.

The multi-head attention layer obtains N input vectors $X_l$ from a previous layer of the multi-head attention layer, and the N input vectors $X_l$ may also be represented as a matrix X. Vectors are transformed by using a self-attention mechanism and based on an association degree between the vectors, to obtain N output vectors. The N output vectors may also be represented as a matrix Y It may be understood that, when the multi-head attention layer is a layer directly connected to an embedding layer, for example, the transformer layer directly connected to the embedding layer in FIG. 7, an input vector obtained by the multi-head attention layer is an embedding vector output by the embedding layer. When the multi-head attention layer is a multi-head attention layer included by a subsequent transformer layer, for example, a multi-head attention layer included by a transformer layer directly connected to a previous transformer layer in FIG. 7, an input vector obtained by the multi-head attention layer is an output vector of the previous transformer layer. At the multi-head attention layer, a multi-head attention (multi-head attention, MHA) based MHA layer includes a plurality of attention heads (heads) (a Head 1, a Head 2, ..., and a Head N shown in FIG. 8).

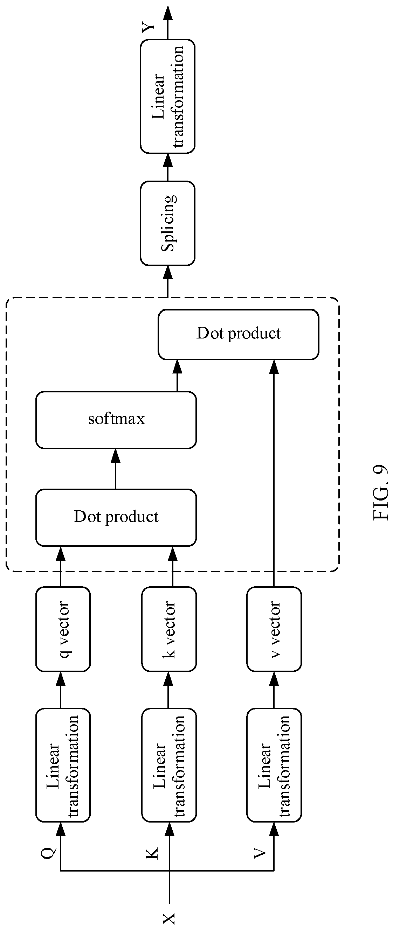

FIG. 9 is a schematic diagram of an operation of an attention head (head). The schematic diagram shows how the attention head (head) transforms an input matrix X into an output matrix Y As shown in FIG. 9, each input vector Xi in N input vectors <X1, X2, ..., XN> is transformed separately by using a first transformation matrix Q, a second transformation matrix K, and a third transformation matrix V, to obtain a first intermediate vector (q vector), a second intermediate vector (k vector), and a third intermediate vector (v vector) that correspond to the input vector. During transformation, linear transformation may be performed, separately by using the first transformation matrix Q, the second transformation matrix K, and the third transformation matrix V, on the input matrix X constituted by the N input vectors, to obtain a Q matrix, a K matrix, and a V matrix of the input matrix, and then the matrices are separately split, to obtain the vector q, the vector k, and the vector v that correspond to each input vector. For any $i^{th}$ input vector Xi in the N input vectors, each association degree between the $i^{th}$ input vector Xi and each input vector Xj is determined based on a point multiplication operation between a first intermediate vector (q vector, qi) corresponding to the $i^{th}$ input vector and a second intermediate vector (k vector, kj) corresponding to the input vector Xj. Although a point multiplication result of qi and kj may alternatively be directly determined as the association degree, more typically, the point multiplication result is first divided by a constant, then a softmax operation is performed, and an operation result is used as the association degree between the input vectors Xi and Xj, that is:

$$\alpha_{i,j} = softmax\left(\frac{q_i \cdot k_j}{\sqrt{d_k}}\right)$$

Therefore, each association degree $\alpha i$ between the $i^{th}$ input vector Xi and each input vector Xj and j may be used as weighting factors to perform weighted combination on a third intermediate vector (v vector, vj) corresponding to each input vector Xj, to obtain an $i^{th}$ combined vector Ci corresponding to the $i^{th}$ input vector Xi:

$$C_i = \sum_{j=1}^{N} \alpha_{i,j} v_j$$

Therefore, a vector sequence <C1, C2, ..., CN> or a matrix C of N combined vectors corresponding to the N input vectors may be obtained. N output vectors may be obtained based on the sequence of the combined vectors. Specifically, in an embodiment, the vector sequence of the N combined vectors may be directly used as the N output vectors, that is, Yi = Ci. In this case, the output matrix Y is a combined vector matrix C, and may also be written as:

$$Y = softmax\left(\frac{QK^T}{\sqrt{d_k}}\right)V$$

The foregoing is a description of a processing process of an attention head (head). In an MHA architecture, an MHA layer maintains m sets of transformation matrices, and each set of transformation matrices includes the first transformation matrix Q, the second transformation matrix K, and the third transformation matrix V Therefore, the foregoing operations may be performed in parallel to obtain m combined vector sequences (that is, m matrices C), and each vector sequence includes N combined vectors obtained based on one set of transformation matrices. In this case, the MHA layer concatenates the obtained m combined vector sequences to obtain a concatenated matrix, and then transforms the concatenated matrix by using a fourth transformation matrix W to obtain the final output matrix Y The output matrix Yis split, that is, corresponds to the N output vectors <Y1, Y2, ..., YN>. According to the foregoing operation process, at the MHA layer, a transformation operation is performed based on an association degree between the N input vectors to obtain the N output vectors.

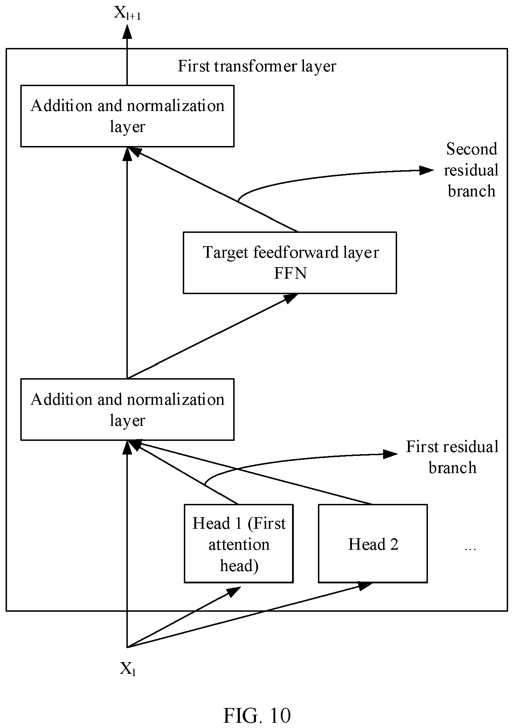

In this embodiment of this application, the branch in which the multi-head attention layer is located and the branch in which the feedforward layer FFN is located may be residual branches in the transformer layer. In this embodiment, the first transformer layer includes the first residual branch and the second residual branch. The first residual branch includes the first attention head. The second residual branch includes the target feedforward layer FFN. For example, FIG. 10 is a schematic diagram of a structure of a first transformer layer. As shown in FIG. 10, the first transformer layer may include a first residual branch and a second residual branch. The first residual branch is a branch in which a first attention head is located. The second residual branch is a branch in which a target FFN is located.

It should be understood that, to implement different tasks, the target neural network model may include a plurality of task layers at an output location. The task layers adapt to different tasks.

602: Obtain a weight value corresponding to a target task, where the weight value includes a first weight value corresponding to the first attention head and/or a second weight value corresponding to the target FFN.

In this embodiment of this application, to adapt to different tasks, different weight values may be determined to perform an operation on an output of an attention head or an output of an FFN at the transformer layer, to control an output of a residual branch, and when executing different tasks, the target neural network model may select different weights, so that the output of the residual branch better adapts to a current task executed by the target neural network model.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

The following describes, by using an example in which the target neural network model needs to execute the target task, how to obtain the weight value corresponding to the target task.

In this embodiment of this application, the weight value may include the first weight value corresponding to the first attention head.

In this embodiment of this application, the weight value may include the second weight value corresponding to the target FFN.

In this embodiment of this application, the weight value may include the first weight value corresponding to the first attention head and the second weight value corresponding to the target FFN.

In an implementation, the weight value corresponding to the target task may be obtained based on a preset mapping relationship. The target weight value includes the first weight value and/or the second weight value. The preset mapping relationship includes a correspondence between a task and a weight value. In the preset mapping relationship, the target task corresponds to the target weight value. The preset mapping relationship is obtained when the target neural network model is trained for the target task.

In the preset mapping relationship, the target task corresponds to the first weight value.

In the preset mapping relationship, the target task corresponds to the second weight value.

In the preset mapping relationship, the target task corresponds to the first weight value and the second weight value.

In this embodiment of this application, the first weight value may be obtained by updating a first initial weight value when the target neural network model is trained for the target task. In a training process of the target neural network model, the target neural network model is for performing a target operation on an output of the first attention head and the first initial weight value to obtain an output of the first residual branch.

In this embodiment of this application, the second weight value may be obtained by updating a second initial weight value when the target neural network model is trained for the target task. In a training process of the target neural network model, the target neural network model is for performing a target operation on an output of the target FFN and the second initial weight value to obtain an output of the second residual branch.

A training device may obtain the to-be-processed data, a correct data processing result of the to-be-processed data, and an initial neural network model for executing a target task. The initial neural network model includes the first transformer layer. The first transformer layer includes the first residual branch and the second residual branch. The first residual branch includes the first attention head. The second residual branch includes the target feedforward layer FFN. The initial neural network model is for performing the target operation on the output of the first attention head and the first initial weight value to obtain the output of the first residual branch, and/or the initial neural network model is for performing the target operation on the output of the target FFN and the second initial weight value to obtain the output of the second residual branch. The training device may process the to-be-processed data based on the initial neural network model to obtain a data processing result. Then, the training device may obtain the loss based on the data processing result and the correct data processing result, and update the first initial weight value and/or the second initial weight value based on the loss until data processing precision of the initial neural network model for the target task meets a requirement, to obtain the first weight value and/or the second weight value.

In this embodiment of this application, different first weight values and second weight values may be obtained for different tasks, so that the preset mapping relationship in the foregoing embodiment may be obtained.

In an implementation, the training device may obtain a loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model. In this embodiment, during one iteration, a skeleton model (the skeleton model may be understood as a partial network other than a weight value in the target neural network model) may be fixed ("fixed" may be understood as keeping a network structure and a parameter value unchanged), and the weight value is updated. Then, during a next iteration, the weight value is fixed, and the skeleton model (the partial network other than the weight value in the target neural network model) is updated.

Specifically, training sets of a plurality of tasks may be obtained. A training set of a $t^{th}$ task is $D^t$. A BERT model (a parameter is W) is pre-trained. The first initial weight value, the second initial weight value or both (a parameter is a gating module parameter $\theta$) are initiated. A loss function of each task t is $L_{traint}(w, \theta_t, f_{layer}, f_{head})$. A specific iteration step is as follows: First, a task ID t is randomly extracted, and a batch of training data is randomly selected from $D^t$; then, a skeleton model is fixed, and the gating module parameter $\theta$ is updated based on the loss function $L_{traint}$; and then, a gating module is fixed, and a skeleton network parameter W is updated based on the loss function $L_{traint}$.

In an implementation, the first initial weight value and the second initial weight value in the foregoing embodiment may be values obtained after a learnable scalar is processed by using *sigmoid* or another function. For example, the first initial weight value may be $f_{\theta_{t,l}}(X)$ = *sigmoid*$(\theta_{t,l})$, where $\theta_{t,l}$ is a learnable scalar, t represents a target task, and l may represent a first attention head. In other words, in the training process, the learnable scalar is updated, and the first initial weight value and the second initial weight value are also accordingly updated. In an implementation, the learnable scalar may be initialized to a constant, for example, 0.5.

It should be understood that the preset mapping relationship may be a discrete correspondence (one task corresponds to one weight value), or may be indicated by using some linear or non-linear models. This is not limited in this application.

In an implementation, an identifier of the target task and at least one of the to-be-processed data and the output of the first attention head may be input into a first neural network to obtain the first weight value; and/or an identifier of the target task and at least one of the to-be-processed data and the output of the target FFN may be input into a second neural network to obtain the second weight value.

In this embodiment of this application, the to-be-processed data, the correct data processing result of the to-be-processed data, and the initial neural network model for executing the target task may be obtained, where the initial neural network model includes the first transformer layer, the first transformer layer includes the first residual branch and the second residual branch, the first residual branch includes the first attention head, the second residual branch includes the target feedforward layer FFN, the initial neural network model is for inputting the identifier of the target task and at least one of the to-be-processed data and the output of the first attention head into a first initial neural network and perform a target operation on an output of the first initial neural network and the output of the first attention head to obtain an output of the first residual branch, and/or the initial neural network model is for inputting the identifier of the target task and at least one of the to-be-processed data and the output of the target FFN into a second initial neural network and perform a target operation on an output of the second initial neural network and the output of the target FFN to obtain an output of the second residual branch; the to-be-processed data may be processed based on the initial neural network model to obtain the data processing result; and the loss may be obtained based on the data processing result and the correct data processing result, and the first initial network model and/or the second initial neural network may be updated based on the loss to obtain the target neural network model.

In other words, the first neural network has a capability of allowing the identifier of the target task and at least one of the to-be-processed data and the output of the first attention head to be input, to output the first weight value. The second neural network has a capability of allowing the identifier of the target task and the to-be-processed data and/or the output of the target FFN to be input into the second neural network, to obtain the second weight value.

In this embodiment of this application, different first neural networks and second neural networks may be obtained through training for different tasks.

The first neural network and the second neural network may be but are not limited to a fully connected network. During training, an initial gating value of a target may be set, and then a model is updated by using a gradient descent method, or training may be performed by using another optimization method such as a reinforcement learning algorithm or a genetic algorithm.

603: Process the to-be-processed data based on the target neural network model to obtain the data processing result, where the target neural network model is for performing the target operation on the output of the first attention head and the first weight value to obtain the output of the first residual branch, and/or the target neural network model is for performing the target operation on the output of the target FFN and the second weight value to obtain the output of the second residual branch.

In this embodiment of this application, the terminal device may perform target task related processing on the to-be-processed data based on the target neural network model to obtain the data processing result, where the target neural network model is for performing the target operation on the output of the first attention head and the first weight value to obtain the output of the first residual branch, and/or the target neural network model is for performing the target operation on the output of the target FFN and the second weight value to obtain the output of the second residual branch. The target operation may be a product operation.

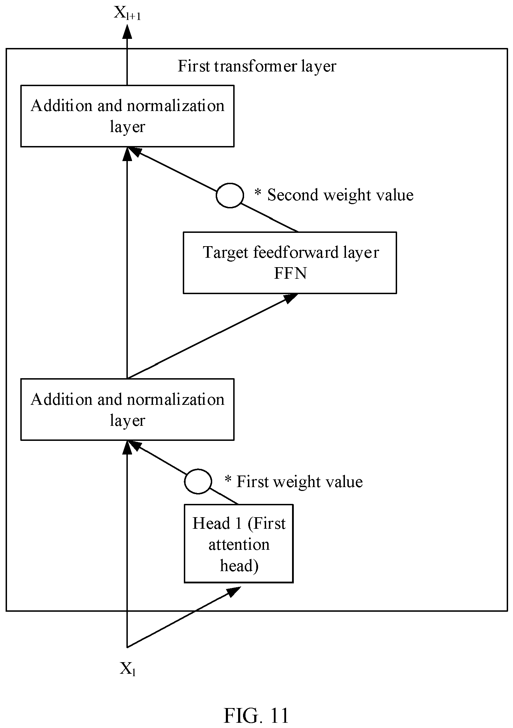

As shown in FIG. 11, the target neural network model may perform a product operation (* first weight value) on the output of the first attention head and the first weight value to obtain the output of the first residual branch, and input the output of the first residual branch to an addition and normalization layer. The target neural network model may perform a product operation (* second weight value) on the output of the target FFN and the second weight value to obtain the output of the second residual branch, and inputs the output of the second residual branch to an addition and normalization layer.

It should be understood that, for other transformer layers in the target neural network model, refer to the descriptions of the first transformer layer. It is assumed that an output of a residual branch of a $l^{th}$ transformer layer is $a_l$, a task $t$ is currently being processed, and an associated weight value is $g_{t,l}$. In this case, an adjusted output of the residual branch is $a'_l = g_{t,l} * a_l$. A combination of weight values of the residual branches may enable the target neural network model to adapt to different tasks.

In this embodiment of this application, a mechanism equivalent to the gating module is added due to the output of the first attention head and/or the output of the FFN, to control a magnitude of an output of a residual branch at the transformer layer. The gating mechanism can learn a combination of dedicated weight values (or the first neural network and/or the second neural network) for each task.

In some cases, the first weight value and the second weight value may be 1 or 0. For example, for a task depending on a character feature, for example, text correction, the model may open only a gate at a bottom layer (in other words, a weight value of a residual branch at a transformer layer close to an embedding layer is set to 1, and a weight value of a residual branch at a transformer layer close to an output layer is set to 0). For a task depending on a syntax feature, for example, syntax analysis, the model may open a gate at a middle layer (in other words, a weight value of a residual branch at a transformer layer that is neither close to the embedding layer nor close to the output layer is set to 1, and a weight value of a residual branch at a transformer layer that is close to the embedding layer and close to the output layer is set to 0). For a complex task, for example, reading comprehension, the model may open gates at all layers.

In this embodiment of this application, the first transformer layer includes a plurality of attention heads. Each of the plurality of attention heads corresponds to a weight value. The target neural network model is for performing a target operation on an output of each attention head and a corresponding weight value to obtain the output of the first residual branch. Different attention heads correspond to different weight values. For example, the plurality of attention heads may include the first attention head and a second attention head. The first attention head and the second attention head are any two of the plurality of attention heads. The target neural network model is further configured to perform a target operation on an output of the second attention head and a third weight value. The first weight value is different from the third weight value. In this embodiment of this application, the target neural network model may include a multi-head attention layer. For each task t, a weight value of an attention head may be deployed for each attention head n to control a magnitude of an output of a residual branch in which the attention head is located.

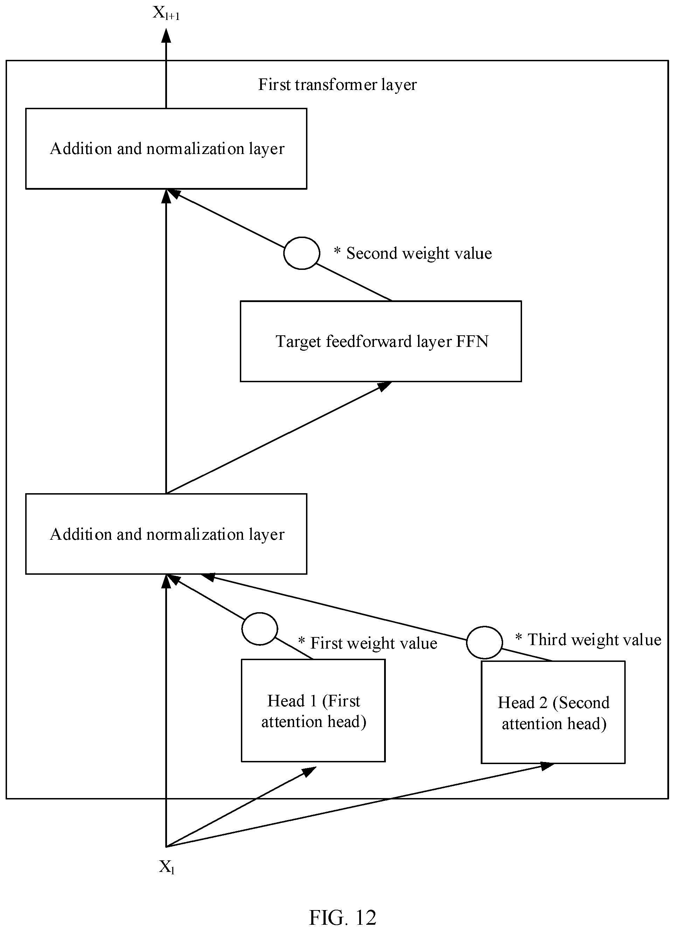

As shown in FIG. 12, the plurality of attention heads include the first attention head and the second attention head. The target neural network model is further configured to perform a product operation on the output of the second attention head and the third weight value.

In this embodiment of this application, when the target neural network model is for using the output of the first attention head as the output of the first residual branch, data processing precision of the target neural network model for the target task is less than first processing precision, and the first processing precision is data processing precision of the target neural network model when the target neural network model is for performing the target operation on the output of the first attention head and the first weight value to obtain the output of the first residual branch;

when the target neural network model is for using the output of the target FFN as the output of the second residual branch, data processing precision of the target neural network model for the target task is less than second processing precision, and the second processing precision is data processing precision of the target neural network model when the target neural network model is for performing the target operation on the output of the target FFN and the second weight value to obtain the output of the second residual branch; or

when the target neural network model is for using the output of the target FFN as the output of the second residual branch and using the output of the target FFN as the output of the second residual branch, data processing precision of the target neural network model for the target task is less than third processing precision, and the third processing precision is data processing precision of the target neural network model when the target neural network model is for performing the target operation on the output of the target FFN and the second weight value to obtain the output of the second residual branch and for performing the target operation on the output of the target FFN and the second weight value to obtain the output of the second residual branch.

In this embodiment of this application, to enable the target neural network model to adapt to different tasks (that is, to enable the target neural network model to have a high data processing capability for different tasks), a weight control policy is added to a residual branch at an original transformer layer, and different weight values are set for different tasks.

In this embodiment of this application, the to-be-processed data and the target neural network model are obtained, where the target neural network model includes the first transformer (transformer) layer, the first transformer layer includes the first residual branch and the second residual branch, the first residual branch includes the first attention head, and the second residual branch includes the target feedforward layer FFN; the weight value corresponding to the target task is obtained, where the weight value includes the first weight value corresponding to the first attention head and/or the second weight value corresponding to the target FFN; and target task related processing is performed on the to-be-processed data based on the target neural network model to obtain the data processing result, where the target neural network model is for performing the target operation on the output of the first attention head and the first weight value to obtain the output of the first residual branch, and/or the target neural network model is for performing the target operation on the output of the target FFN and the second weight value to obtain the output of the second residual branch. Weight values for controlling an output of a residual branch are set for different tasks, which is equivalent to that a dedicated distributed representation combination of weight values may be set for each task, to implement multi-task learning of the target neural network model. In addition, in this embodiment, compared with adding a neural network adaptive to different tasks at an output layer, fewer parameters need to be learned, so that a computing resource requirement of the terminal device for running the target neural network model can be lowered.

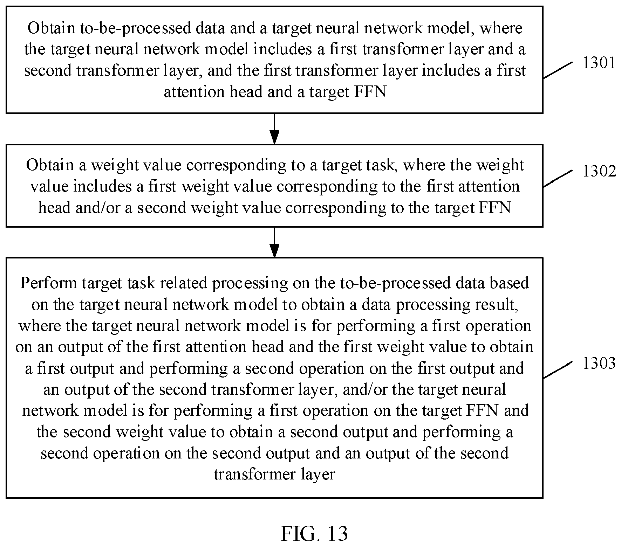

As shown in FIG. 13, an embodiment of this application further provides a data processing method. The method includes the following steps.

1301: Obtain to-be-processed data and a target neural network model, where the target neural network model includes a first transformer layer and a second transformer layer, and the first transformer layer includes a first attention head and a target FFN.

For descriptions of the first transformer layer, refer to the descriptions in step 601. Similarities are not described herein again.

In this embodiment of this application, the target neural network model includes a plurality of transformer layers and an output layer. The second transformer layer is a transformer layer that is in the plurality of transformer layers and that is closest to the output layer. In other words, the second transformer layer is a transformer layer that is in the plurality of transformer layers and that is farthest from an embedding layer.

1302: Obtain a weight value corresponding to a target task, where the weight value includes a first weight value corresponding to the first attention head and/or a second weight value corresponding to the target FFN.

For descriptions of step 1302, refer to the descriptions of step 602. Similarities are not described herein again.

1303: Process the to-be-processed data based on the target neural network model to obtain a data processing result, where the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer.

Different from step 603, in this embodiment, the target neural network model is for performing the first operation on the output of the first attention head and the first weight value to obtain the first output. The first output is not used as an output of a first residual branch. Instead, the second operation is performed on the first output and the output of the second transformer layer. In this embodiment, the target neural network model is for performing the first operation on the target FFN and the second weight value to obtain the second output. The second output is not used as an output of a second residual branch. Instead, the second operation is performed on the second output and the output of the second transformer layer. The first operation may include a product operation, and/or the second operation may include a sum operation.

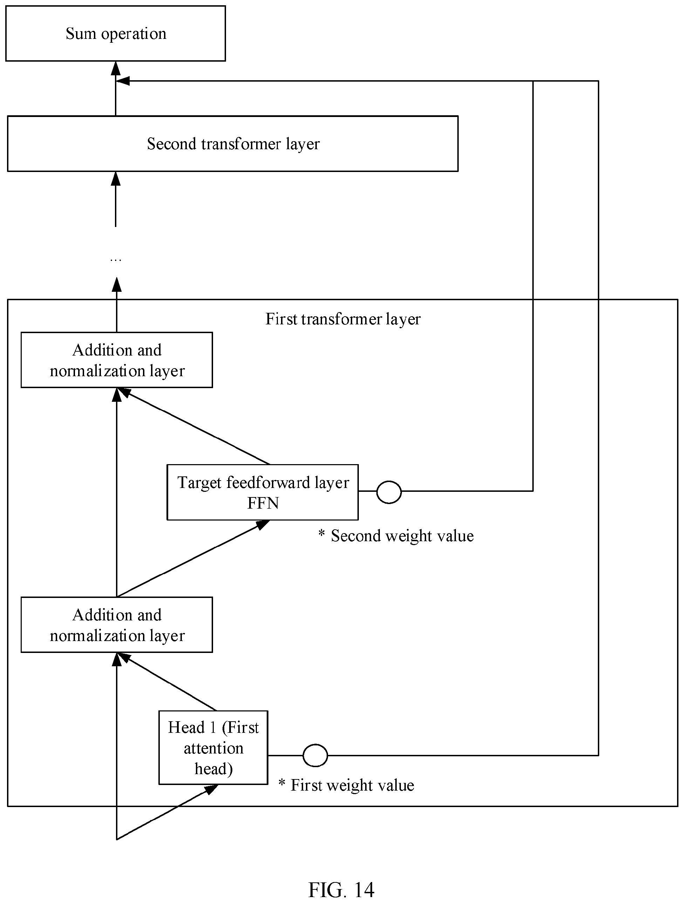

As shown in FIG. 14, the target neural network model is for performing a product operation (* first weight value) on the output of the first attention head and the first weight value to obtain the first output, and performing a sum operation on the first output and the output of the second transformer layer, and/or the target neural network model is for performing a product operation (* second weight value) on the target FFN and the second weight value to obtain the second output, and performing a sum operation on the second output and the output of the second transformer layer.

It should be understood that the same as that in the embodiment corresponding to FIG. 6, the target neural network model may perform the target operation (for example, the product operation) on the output of the first attention head and the first weight value and use an operation result as the output of the first residual branch. In addition, the target neural network model may perform the sum operation on the first output and the output of the second transformer layer. Similar to the embodiment corresponding to FIG. 6, the target neural network model may perform the target operation (for example, the product operation) on the target FFN and the second weight value and use an operation result as the output of the second residual branch. In addition, the target neural network model may perform the sum operation on the second output and the output of the second transformer layer.

In a possible implementation, the first transformer layer includes the first residual branch and the second residual branch. The first residual branch includes the first attention head.

When the target neural network model is for using the output of the first attention head only as the output of the first residual branch, data processing precision of the target neural network model for the target task is less than first processing precision, and the first processing precision is data processing precision of the target neural network model when the target neural network model is for performing the first operation on the output of the first attention head and the first weight value to obtain the first output and performing a second operation on a third output and the output of the second transformer layer;

when the target neural network model is for using an output of the target FFN only as an output of the second residual branch, data processing precision of the target neural network model for the target task is less than second processing precision, and the second processing precision is data processing precision of the target neural network model when the target neural network model is for performing the first operation on the output of the target FFN and the second weight value to obtain the output of the second residual branch; or

when the target neural network model is for using the output of the first attention head only as an output of the first residual branch and use an output of the target FFN as an output of the second residual branch, data processing precision of the target neural network model for the target task is less than third processing precision, and the third processing precision is data processing precision of the target neural network model when the target neural network model is for performing the first operation on the output of the first attention head and the first weight value to obtain the first output and performing a second operation on a third output and the output of the second transformer layer, and for performing a first operation on the output of the target FFN and the second weight value to obtain the output of the second residual branch and performing a first operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing a first operation on the output of the first attention head and the first initial weight value, and performing a second operation on an operation result and the output of the second transformer layer.

In a possible implementation, the second weight value is obtained by updating a second initial weight value when the target neural network model is trained for the target task. In a training process of the target neural network model, the target neural network model is for performing a first operation on the target FFN and the second initial weight value, and performing a second operation on an operation result and the output of the second transformer layer.

In a possible implementation, the weight value corresponding to the target task may be obtained based on a preset mapping relationship. The target weight value includes the first weight value and/or the second weight value. The preset mapping relationship includes a correspondence between a task and a weight value. In the preset mapping relationship, the target task corresponds to the target weight value.

In a possible implementation, the to-be-processed data, a correct data processing result of the to-be-processed data, and an initial neural network model for executing a target task are obtained, where the initial neural network model includes the first transformer layer and the second transformer layer, the first transformer layer includes the first attention head and the target FFN, the initial neural network model is for performing the first operation on the output of the first attention head and the first weight value to obtain the first output and performing the second operation on the first output and the output of the second transformer layer, and/or the initial neural network model is for performing the first operation on the target FFN and the second weight value to obtain the second output and perform the second operation on the second output and the output of the second transformer layer; the to-be-processed data is processed based on the target neural network model to obtain the data processing result; and the loss is obtained based on the data processing result and the correct data processing result, and the first initial weight value or the second initial weight value or both are updated based on the loss to obtain the target neural network model.

In a possible implementation, a training device may obtain the loss based on the data processing result and the correct data processing result, update only the first initial weight value and/or the second initial weight value based on the loss in an $i^{th}$ iteration process to obtain a first neural network model, and update a network parameter other than the first initial weight value and/or the second initial weight value in the first neural network model based on the loss in an $(i+1)^{th}$ iteration process to obtain the target neural network model.

In a possible implementation, an identifier of the target task and at least one of the to-be-processed data and the output of the first attention head may be input into a first neural network to obtain the first weight value; and/or an identifier of the target task and at least one of the to-be-processed data and the output of the target FFN may be input into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and the to-be-processed data and/or the output of the first attention head into the first initial neural network, performing a first operation on an output of the first initial neural network and the output of the first attention head, and performing a second operation on an operation result and the output of the second transformer layer.

In a possible implementation, the second neural network is obtained by updating a second initial neural network when the target neural network model is trained for the target task. In a training process of the target neural network model, the target neural network model is for inputting the identifier of the target task and the to-be-processed data and/or the output of the target FFN into the second initial neural network, performing a first operation on an output of the second initial neural network and the output of the target FFN, and performing a second operation on an operation result and the output of the second transformer layer.

In a possible implementation, the training device may obtain the to-be-processed data, the correct data processing result of the to-be-processed data, and the initial neural network model for executing the target task. The initial neural network model includes the first transformer layer and the second transformer layer. The first transformer layer includes the first attention head and the target FFN. The initial neural network model is for inputting the identifier of the target task and the to-be-processed data and/or the output of the first attention head into the first initial neural network, performing the first operation on the output of the first initial neural network and the output of the first attention head, and performing the second operation on the operation result and the output of the second transformer layer, and/or the initial neural network model is for inputting the identifier of the target task and the to-be-processed data and/or the output of the target FFN into the second initial neural network, performing the first operation on the output of the second initial neural network and the output of the target FFN, and performing the second operation on the operation result and the output of the second transformer layer. The training device may process the to-be-processed data based on the target neural network model to obtain the data processing result. The training device may obtain the loss based on the data processing result and the correct data processing result, and update the first initial neural network and/or the second initial neural network based on the loss to obtain the target neural network model.

In a possible implementation, the training device may obtain the loss based on the data processing result and the correct data processing result, update only the first initial neural network and/or the second initial neural network based on the loss in an $i^{th}$ iteration process to obtain the first neural network model, and update a network parameter other than the first initial neural network and/or the second initial neural network in the first neural network model based on the loss in an $(i+1)^{th}$ iteration process to obtain the target neural network model.

In a possible implementation, the first transformer layer includes a plurality of attention heads. The plurality of attention heads include the first attention head and a second attention head. Correspondingly, the target neural network model is further configured to perform a first operation on an output of the second attention head and a third weight value to obtain a third output, and performing a second operation on the third output and the output of the second transformer layer. The first weight value is different from the third weight value.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

It should be understood that for the embodiment corresponding to FIG. 13, refer to the descriptions of the embodiment corresponding to FIG. 6. Similarities are not described herein again.

From a perspective of model training, an embodiment of this application further provides a data processing method, including:

obtaining to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for performing a target operation on an output of the first attention head and a first initial weight value to obtain an output of the first residual branch, and/or the initial neural network model is for performing a target operation on an output of the target FFN and a second initial weight value to obtain an output of the second residual branch;

processing the to-be-processed data based on the initial neural network model to obtain a data processing result; and

obtaining a loss based on the data processing result and the correct data processing result, and updating a first initial weight value and/or a second initial weight value based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the obtaining a loss based on the data processing result and the correct data processing result, and updating a first initial weight value and/or a second initial weight value based on the loss to obtain a target neural network model includes: obtaining the loss based on the data processing result and the correct data processing result, updating only the first initial weight value and/or the second initial weight value based on the loss in an $i^{th}$ iteration process to obtain the first neural network model, and updating a network parameter other than the first initial weight value and/or the second initial weight value in the first neural network model based on the loss in an $(i+1)^{th}$ iteration process to obtain the target neural network model.

An embodiment of this application further provides a data processing method, including:

obtaining to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for inputting an identifier of the target task and the to-be-processed data and/or an output of the first attention head into a first initial neural network and perform a target operation on an output of the first initial neural network and the output of the first attention head to obtain an output of the first residual branch, and/or the initial neural network model is for inputting an identifier of the target task and the to-be-processed data and/or an output of the target FFN into a second initial neural network and perform a target operation on an output of the second initial neural network and the output of the target FFN to obtain an output of the second residual branch;

processing the to-be-processed data based on the initial neural network model to obtain a data processing result; and

obtaining a loss based on the data processing result and the correct data processing result, and updating the first initial neural network and/or the second initial neural network based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the obtaining a loss based on the data processing result and the correct data processing result, and updating the first initial neural network and/or the second initial neural network based on the loss to obtain a target neural network model includes:

obtaining the loss based on the data processing result and the correct data processing result, updating only the first initial neural network and/or the second initial neural network based on the loss in an $i^{th}$ iteration process to obtain the first neural network model, and updating a network parameter other than the first initial neural network and/or the second initial neural network in the first neural network model based on the loss in an $(i+1)^{th}$ iteration process to obtain the target neural network model.

An embodiment of this application further provides a data processing method, including:

obtaining to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for performing a first operation on an output of the first attention head and a first weight value to obtain a first output and perform a second operation on the first output and an output of the second transformer layer, and/or the initial neural network model is for performing a first operation on the target FFN and the second weight value to obtain a second output and perform a second operation on the second output and an output of the second transformer layer;

processing the to-be-processed data based on a target neural network model to obtain a data processing result; and

obtaining a loss based on the data processing result and the correct data processing result, and updating a first initial weight value and/or a second initial weight value based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the obtaining a loss based on the data processing result and the correct data processing result, and updating a first initial weight value and/or a second initial weight value based on the loss to obtain the target neural network model includes: obtaining the loss based on the data processing result and the correct data processing result, updating only the first initial weight value and/or the second initial weight value based on the loss in an $i^{th}$ iteration process to obtain the first neural network model, and updating a network parameter other than the first initial weight value and/or the second initial weight value in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

An embodiment of this application further provides a data processing method, including:

obtaining to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for inputting an identifier of the target task and the to-be-processed data and/or an output of the first attention head into a first initial neural network, performing a first operation on an output of the first initial neural network and the output of the first attention head, and performing a second operation on an operation result and an output of the second transformer layer, and/or the initial neural network model is for inputting an identifier of the target task and the to-be-processed data and/or an output of the target FFN into a second initial neural network, performing a first operation on an output of the second initial neural network and the output of the target FFN, and performing a second operation on an operation result and an output of the second transformer layer;

processing the to-be-processed data based on a target neural network model to obtain a data processing result; and

obtaining a loss based on the data processing result and the correct data processing result, and updating the first initial neural network and/or the second initial neural network based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the obtaining a loss based on the data processing result and the correct data processing result, and updating the first initial neural network and/or the second initial neural network based on the loss to obtain the target neural network model includes:

obtaining the loss based on the data processing result and the correct data processing result, updating only the first initial neural network and/or the second initial neural network based on the loss in an $i^{th}$ iteration process to obtain the first neural network model, and updating a network parameter other than the first initial neural network and/or the second initial neural network in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

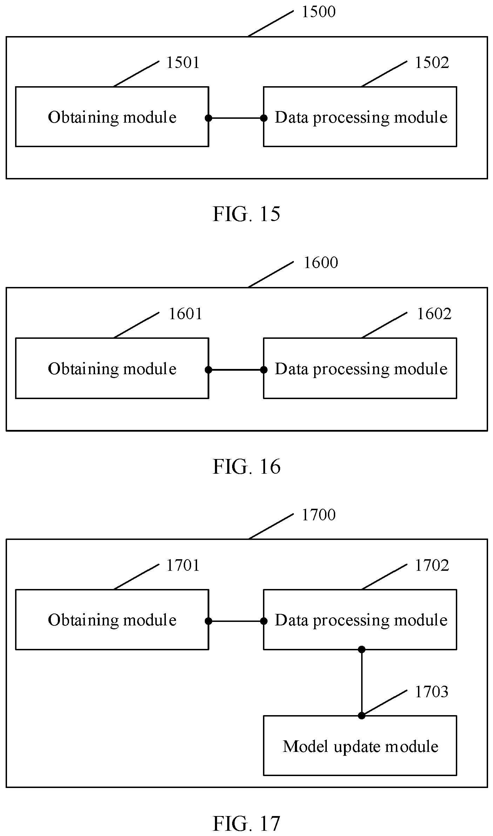

Based on the embodiments corresponding to FIG. 1 to FIG. 14, the following further provides a related device used to implement the solutions, to better implement the solutions in embodiments of this application. Specifically, refer to FIG. 15. FIG. 15 is a schematic diagram of a structure of a data processing device 1500 according to an embodiment of this application. The data processing device 1500 may be a terminal device or a server. The data processing device 1500 includes:

an obtaining module 1501, configured to: obtain to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN; and obtain a weight value corresponding to a target task, where the weight value includes a first weight value corresponding to the first attention head and/or a second weight value corresponding to the target FFN; and
a data processing module 1502, configured to process the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch.

In a possible implementation, when the target neural network model is for using the output of the first attention head as the output of the first residual branch, data processing precision of the target neural network model for the target task is less than first processing precision, and the first processing precision is data processing precision of the target neural network model when the target neural network model is for performing the target operation on the output of the first attention head and the first weight value to obtain the output of the first residual branch;

when the target neural network model is for using the output of the target FFN as the output of the second residual branch, data processing precision of the target neural network model for the target task is less than second processing precision, and the second processing precision is data processing precision of the target neural network model when the target neural network model is for performing the target operation on the output of the target FFN and the second weight value to obtain the output of the second residual branch; or
when the target neural network model is for using the output of the target FFN as the output of the second residual branch and using the output of the target FFN as the output of the second residual branch, data processing precision of the target neural network model for the target task is less than third processing precision, and the third processing precision is data processing precision of the target neural network model when the target neural network model is for performing the target operation on the output of the target FFN and the second weight value to obtain the output of the second residual branch and for performing the target operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing the target operation on the output of the first attention head and the first initial weight value to obtain the output of the first residual branch.

In a possible implementation, the second weight value is obtained by updating a second initial weight value when the target neural network model is trained for the target task. In a training process of the target neural network model, the target neural network model is for performing the target operation on the output of the target FFN and the second initial weight value to obtain the output of the second residual branch.

In a possible implementation, the obtaining module is configured to:

obtain, based on a preset mapping relationship, the weight value corresponding to the target task, where the weight value corresponding to the target task includes the first weight value and/or the second weight value, and the preset mapping relationship includes a correspondence between a task and a weight value.

In a possible implementation, the obtaining module is configured to:

input an identifier of the target task and at least one of the to-be-processed data and the output of the first attention head into a first neural network to obtain the first weight value; and/or
input an identifier of the target task and at least one of the to-be-processed data and the output of the target FFN into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, and performing a target operation on an output of the first initial neural network and the output of the first attention head to obtain the output of the first residual branch.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, and performing a target operation on an output of the second initial neural network and the output of the target FFN to obtain the output of the second residual branch.

In a possible implementation, the first transformer layer includes a plurality of attention heads. Each of the plurality of attention heads corresponds to a weight value. The target neural network model is for performing a target operation on an output of each attention head and a corresponding weight value to obtain the output of the first residual branch. Different attention heads correspond to different weight values.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

For specific descriptions of the data processing device 1500, refer to the descriptions of the embodiment corresponding to FIG. 6. The obtaining module 1501 may perform step 601, step 602, and the descriptions in the corresponding embodiment. The data processing module 1502 may perform step 603 and the descriptions in the corresponding embodiment.

FIG. 16 is a schematic diagram of a structure of a data processing device 1600 according to an embodiment of this application. The data processing device 1600 may be a terminal device or a server. The data processing device 1600 includes:

an obtaining module 1601, configured to: obtain to-be-processed data and a target neural network model, where the target neural network model includes a first transformer layer and a second transformer layer, and the first transformer layer includes a first attention head and a target FFN; and obtain a weight value corresponding to a target task, where the weight value includes a first weight value corresponding to the first attention head and/or a second weight value corresponding to the target FFN; and
a data processing module 1602, configured to process the to-be-processed data based on the target neural network model to obtain a data processing result, where the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer.

In a possible implementation, the target neural network model includes a plurality of transformer layers and an output layer. The second transformer layer is a transformer layer that is in the plurality of transformer layers and that is closest to the output layer.

In a possible implementation, the first transformer layer includes a first residual branch and a second residual branch. The first residual branch includes the first attention head. The second residual branch includes the target FFN.

When the target neural network model is for using the output of the first attention head only as the output of the first residual branch, data processing precision of the target neural network model for the target task is less than first processing precision, and the first processing precision is data processing precision of the target neural network model when the target neural network model is for performing the first operation on the output of the first attention head and the first weight value to obtain the first output and performing a second operation on a third output and the output of the second transformer layer;

when the target neural network model is for using an output of the target FFN only as an output of the second residual branch, data processing precision of the target neural network model for the target task is less than second processing precision, and the second processing precision is data processing precision of the target neural network model when the target neural network model is for performing the first operation on the output of the target FFN and the second weight value to obtain the output of the second residual branch; or

when the target neural network model is for using the output of the first attention head only as an output of the first residual branch and use an output of the target FFN as an output of the second residual branch, data processing precision of the target neural network model for the target task is less than third processing precision, and the third processing precision is data processing precision of the target neural network model when the target neural network model is for performing the first operation on the output of the first attention head and the first weight value to obtain the first output and performing a second operation on a third output and the output of the second transformer layer, and for performing a first operation on the output of the target FFN and the second weight value to obtain the output of the second residual branch and performing a first operation on the output of the target FFN and the second weight value to obtain the output of the second residual branch.

In a possible implementation, the first weight value is obtained by updating a first initial weight value when the target neural network model is trained for the target task. In a training process of the target neural network model, the target neural network model is for performing a first operation on the output of the first attention head and the first initial weight value, and performing a second operation on an operation result and the output of the second transformer layer.

In a possible implementation, the second weight value is obtained by updating a second initial weight value when the target neural network model is trained for the target task. In a training process of the target neural network model, the target neural network model is for performing a first operation on the target FFN and the second initial weight value, and performing a second operation on an operation result and the output of the second transformer layer.

In a possible implementation, the obtaining module is configured to:

obtain, based on a preset mapping relationship, the weight value corresponding to the target task, where the weight value corresponding to the target task includes the first weight value and/or the second weight value, and the preset mapping relationship includes a correspondence between a task and a weight value.

In a possible implementation, the obtaining module is configured to:

input an identifier of the target task and at least one of the to-be-processed data and the output of the first attention head into a first neural network to obtain the first weight value; and/or
input an identifier of the target task and at least one of the to-be-processed data and the output of the target FFN into a second neural network to obtain the second weight value.

In a possible implementation, the first neural network is obtained by updating a first initial neural network when the target neural network model is trained for the target task. In a training process of the target neural network model, the target neural network model is for inputting the identifier of the target task and at least one of the to-be-processed data and the output of the first attention head into the first initial neural network, performing a first operation on an output of the first initial neural network and the output of the first attention head, and performing a second operation on an operation result and the output of the second transformer layer.

In a possible implementation, the second neural network is obtained by updating a second initial neural network when the target neural network model is trained for the target task. In a training process of the target neural network model, the target neural network model is for inputting the identifier of the target task and at least one of the to-be-processed data and the output of the target FFN into the second initial neural network, performing a first operation on an output of the second initial neural network and the output of the target FFN, and performing a second operation on an operation result and the output of the second transformer layer.

In a possible implementation, the first transformer layer includes a plurality of attention heads. Each of the plurality of attention heads corresponds to a weight value. Correspondingly, the target neural network model is for performing a first operation on an output of each attention head and a corresponding weight value to obtain a third output, and performing a second operation on the third output and the output of the second transformer layer. Different attention heads correspond to different weight values.

In a possible implementation, the first operation includes a product operation, and the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

For specific descriptions of the data processing device 1600, refer to the descriptions of the embodiment corresponding to FIG. 13. The obtaining module 1601 may perform step 1301, step 1302, and the descriptions in the corresponding embodiment. The data processing module 1602 may perform step 1303 and the descriptions in the corresponding embodiment.

FIG. 17 is a schematic diagram of a structure of a data processing device 1700 according to an embodiment of this application. The data processing device 1700 may be a terminal device or a server. The data processing device 1700 includes:

> an obtaining module 1701, configured to obtain to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for performing a target operation on an output of the first attention head and a first initial weight value to obtain an output of the first residual branch, and/or the initial neural network model is for performing a target operation on an output of the target FFN and a second initial weight value to obtain an output of the second residual branch;
> a data processing module 1702, configured to process the to-be-processed data based on the initial neural network model to obtain a data processing result; and
> a model update module 1703, configured to obtain a loss based on the data processing result and the correct data processing result, and update a first initial weight value and/or a second initial weight value based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the model update module is configured to: obtain the loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model.

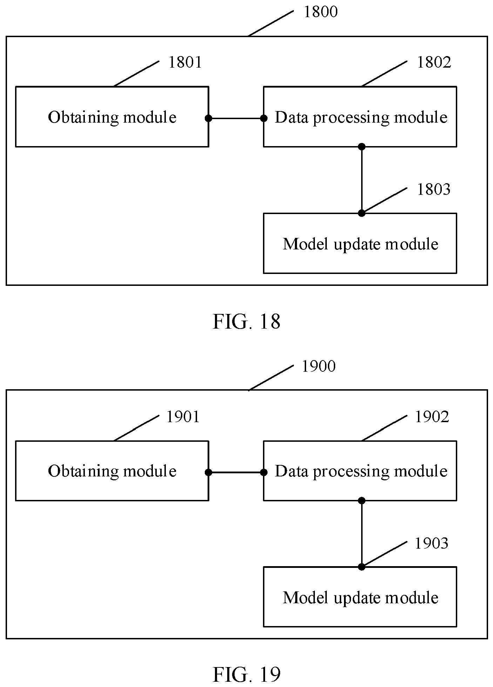

FIG. 18 is a schematic diagram of a structure of a data processing device 1800 according to an embodiment of this application. The data processing device 1800 may be a terminal device or a server. The data processing device 1800 includes:

> an obtaining module 1801, configured to obtain to-be-processed data, a correct data processing result of the to-be-processed data, and an initial neural network model for executing a target task, where the initial neural network model includes a first transformer layer, the first transformer layer includes a first residual branch and a second residual branch, the first residual branch includes a first attention head, the second residual branch includes a target feedforward layer FFN, the initial neural network model is for inputting an identifier of the target task and the to-be-processed data and/or an output of the first attention head into a first initial neural network and perform a target operation on an output of the first initial neural network and the output of the first attention head to obtain an output of the first residual branch, and/or the initial neural network model is for inputting an identifier of the target task and the to-be-processed data and/or an output of the target FFN into a second initial neural network and perform a target operation on an output of the second initial neural network and the output of the target FFN to obtain an output of the second residual branch;
> a data processing module 1802, configured to process the to-be-processed data based on the initial neural network model to obtain a data processing result; and
> a model update module 1803, configured to obtain a loss based on the data processing result and the correct data processing result, and update the first initial neural network and/or the second initial neural network based on the loss to obtain a target neural network model.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the target operation includes a product operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

In a possible implementation, the model update module is configured to: obtain the loss based on the data processing result and the correct data processing result, update only the first initial neural network and/or the second initial neural network based on the loss in an $i^{th}$ iteration process to obtain the first neural network model, and update a network parameter other than the first initial neural network and/or the second initial neural network in the first neural network model based on the loss in an $(i+1)^{th}$ iteration process to obtain the target neural network model.

FIG. 19 is a schematic diagram of a structure of a data processing device 1900 according to an embodiment of this application. The data processing device 1900 may be a terminal device or a server. The data processing device 1900 includes:

an obtaining module 1901, configured to obtain to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for performing a first operation on an output of the first attention head and a first weight value to obtain a first output and perform a second operation on the first output and an output of the second transformer layer, and/or the initial neural network model is for performing a first operation on the target FFN and the second weight value to obtain a second output and perform a second operation on the second output and an output of the second transformer layer;

a data processing module 1902, configured to process the to-be-processed data based on a target neural network model to obtain a data processing result; and

a model update module 1903, configured to obtain a loss based on the data processing result and the correct data processing result, and update a first initial weight value and/or a second initial weight value based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the model update module is configured to: obtain the loss based on the data processing result and the correct data processing result, update only the first initial weight value and/or the second initial weight value based on the loss in an $i^{th}$ iteration process to obtain the first neural network model, and update a network parameter other than the first initial weight value and/or the second initial weight value in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

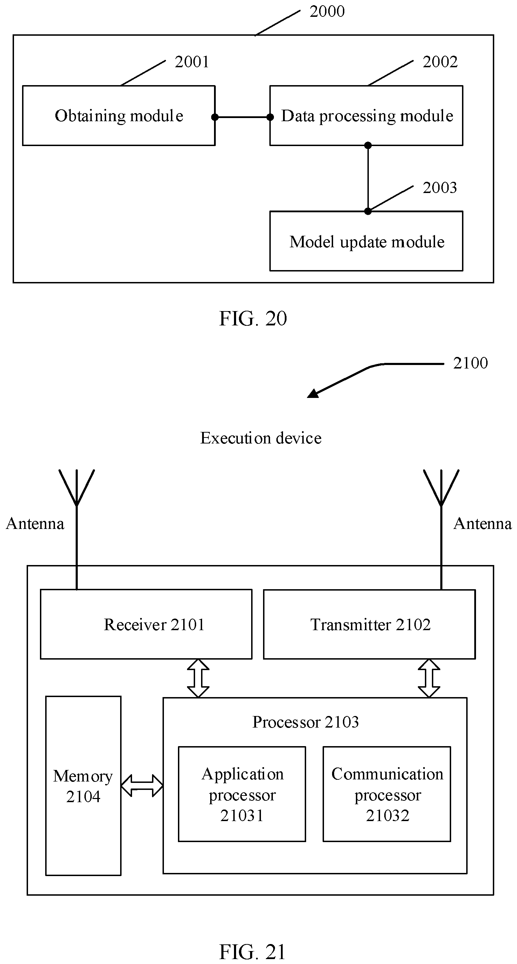

FIG. 20 is a schematic diagram of a structure of a data processing device 2000 according to an embodiment of this application. The data processing device 2000 may be a terminal device or a server. The data processing device 2000 includes:

an obtaining module 2001, configured to obtain to-be-processed data, a correct data processing result of the to-be-processed data, and an initial neural network model for executing a target task, where the initial neural network model includes a first transformer layer and a second transformer layer, the first transformer layer includes a first attention head and a target FFN, the initial neural network model is for inputting an identifier of the target task and the to-be-processed data and/or an output of the first attention head into a first initial neural network, performing a first operation on an output of the first initial neural network and the output of the first attention head, and performing a second operation on an operation result and an output of the second transformer layer, and/or the initial neural network model is for inputting an identifier of the target task and the to-be-processed data and/or an output of the target FFN into a second initial neural network, performing a first operation on an output of the second initial neural network and the output of the target FFN, and performing a second operation on an operation result and an output of the second transformer layer;

a data processing module 2002, configured to process the to-be-processed data based on a target neural network model to obtain a data processing result; and

a model update module 2003, configured to obtain a loss based on the data processing result and the correct data processing result, and update the first initial neural network and/or the second initial neural network based on the loss to obtain the target neural network model.

In a possible implementation, the initial neural network model includes a plurality of transformer layers and an output layer. The second transformer layer is a transformer layer that is in the plurality of transformer layers and that is closest to the output layer.

In a possible implementation, the first transformer layer includes a plurality of attention heads. The plurality of attention heads include the first attention head and a second attention head. Correspondingly, the initial neural network model is further configured to perform a target operation on an output of the second attention head and a third weight value. The first weight value is different from the third weight value.

In a possible implementation, the model update module is configured to: obtain the loss based on the data processing result and the correct data processing result, update only the first initial neural network and/or the second initial neural network based on the loss in an $i^{th}$ iteration process to obtain the first neural network model, and update a network parameter other than the first initial neural network and/or the second initial neural network in the first neural network model based on the loss in an $(i+1)^{th}$ iteration process to obtain the target neural network model.

In a possible implementation, the first operation includes a product operation, and/or the second operation includes a sum operation.

In a possible implementation, the target task includes one of the following: reading comprehension, text translation, restatement recognition, named entity recognition, text emotion analysis, natural language reasoning, text automatic question and answer, text intention recognition, text classification, text simplification, and text story generation.

The following describes an execution device according to an embodiment of this application. FIG. 21 is a schematic diagram of a structure of an execution device according to an embodiment of this application. An execution device 2100 may be specifically presented as a virtual reality VR device, a mobile phone, a tablet computer, a notebook computer, an intelligent wearable device, a monitoring data processing device, a server, or the like. This is not limited herein. Specifically, the execution device 2100 includes a receiver 2101, a transmitter 2102, a processor 2103, and a memory 2104 (there may be one or more processors 2103 in the execution device 2100, and one processor is used as an example in FIG. 21). The processor 2103 may include an application processor 21031 and a communication processor 21032. In some embodiments of this application, the receiver 2101, the transmitter 2102, the processor 2103, and the memory 2104 may be connected through a bus or in another manner.

The memory 2104 may include a read-only memory and a random access memory, and provide instructions and data to the processor 2103. A part of the memory 2104 may further include a non-volatile random access memory (non-volatile random access memory, NVRAM). The memory 2104 stores a processor and operation instructions, an executable module or a data structure, or a subset thereof, or an extended set thereof. The operation instructions may include various operation instructions used to implement various operations.

The processor 2103 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 2103, or may be implemented by the processor 2103. The processor 2103 may be an integrated circuit chip, and has a signal processing capability. In an implementation process, steps in the foregoing methods can be implemented by using a hardware integrated logical circuit in the processor 2103, or by using instructions in a form of software. The processor 2103 may be a general-purpose processor, a digital signal processor (digital signal processor, DSP), a microprocessor, or a microcontroller. The processor 2103 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 2103 may implement or perform the methods, the steps, and the logical block diagrams disclosed in embodiments of this application. The general-purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. The software module may be located in a storage medium mature in the art, such as a random access memory, a flash memory, a read-only memory, a programmable read-only memory, an electrically erasable programmable memory, or a register. The storage medium is located in the memory 2104, and the processor 2103 reads information in the memory 2104 and completes the steps of the foregoing methods in combination with hardware of the processor.

The receiver 2101 may be configured to receive input digit or character information, and generate a signal input related to a related setting and function control of the execution device. The transmitter 2102 may be configured to output digital or character information through a first interface. The transmitter 2102 may be further configured to send instructions to a disk group through the first interface, to modify data in the disk group. The transmitter 2102 may further include a display device such as a display screen.

In this embodiment of this application, in one case, the processor 2103 is configured to perform the data processing methods performed by the devices in embodiments corresponding to FIG. 6 and FIG. 13.

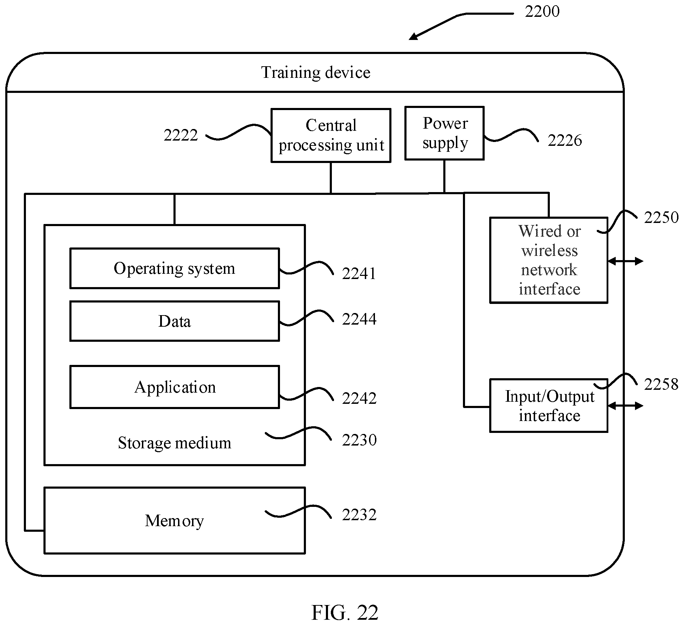

An embodiment of this application further provides a training device. FIG. 22 is a schematic diagram of a structure of a training device according to an embodiment of this application. The data processing apparatus described in the embodiments corresponding to FIG. 17 to FIG. 20 may be deployed on a training device 2200. Specifically, the training device 2200 is implemented by one or more servers, and the training device 2200 may differ greatly due to different configurations or performance. The training device may include one or more central processing units (central processing units, CPU) 2222 (for example, one or more processors), a memory 2232, and one or more storage media 2230 (for example, one or more mass storage devices) for storing an application 2242 or data 2244. The memory 2232 and the storage medium 2230 may perform temporary storage or permanent storage. A program stored in the storage medium 2230 may include at least one module (not shown in the figure), and each module may include a series of instruction operations for the training device. Still further, the central processing unit 2222 may be configured to communicate with the storage medium 2230, to perform, on the training device 2200, a series of instruction operations in the storage medium 2230.

The training device 2200 may further include one or more power supplies 2226, one or more wired or wireless network interfaces 2250, one or more input/output interfaces 2258, and/or one or more operating systems 2241, for example, Windows ServerTM, Mac OS XTM, UnixTM, LinuxTM, and FreeBSDTM.

In this embodiment of this application, the central processing unit 2222 is configured to perform the data processing method performed by the data processing apparatus in the embodiment corresponding to FIG. 18.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

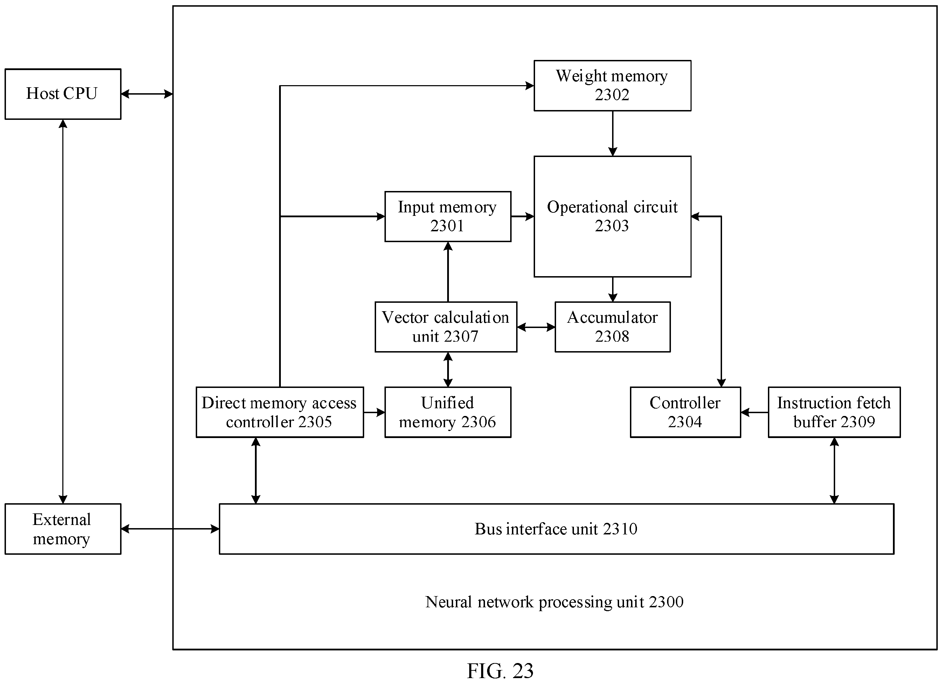

Specifically, FIG. 23 is a schematic diagram of a structure of a chip according to an embodiment of this application. The chip may be represented as a neural network processing unit NPU 2300. The NPU 2300 is mounted to a host CPU (Host CPU) as a coprocessor, and the host CPU allocates a task. A core part of the NPU is an operational circuit 2303. The operational circuit 2303 is controlled by a controller 2304 to extract matrix data in a memory and perform a multiplication operation.

In some implementations, a plurality of processing units (Process Engine, PE) are included in the operational circuit 2303. In some implementations, the operational circuit 2303 is a two-dimensional systolic array. The operational circuit 2303 may alternatively be a one-dimensional systolic array or another electronic circuit that can perform mathematical operations such as multiplication and addition. In some implementations, the operational circuit 2303 is a general-purpose matrix processor.

For example, it is assumed that there are an input matrix A, a weight matrix B, and an output matrix C. The operational circuit extracts corresponding data of the matrix B from the weight memory 2302, and buffers the corresponding data into each PE in the operational circuit. The operational circuit extracts data of the matrix A from the input memory 2301, performs a matrix operation between the data of the matrix A and the matrix B to obtain a partial matrix result or a final matrix result, and stores the result into an accumulator (accumulator) 2308.

A unified memory 2306 is configured to store input data and output data. Weight data is directly transferred to the weight memory 2302 by using a direct memory access controller (Direct Memory Access Controller, DMAC) 2305. The input data is also transferred to the unified memory 2306 by using the DMAC.

BIU is the abbreviation for bus interface unit. A bus interface unit 2310 is configured to perform interaction between an AXI bus, and the DMAC and an instruction fetch buffer (Instruction Fetch Buffer, IFB) 2309.

The bus interface unit 2310 (Bus Interface Unit, BIU for short) is configured for the instruction fetch buffer 2309 to obtain an instruction from an external memory, and is further configured for the direct memory access controller 2305 to obtain raw data of the input matrix A or the weight matrix B from the external memory.

The DMAC is mainly configured to: transfer input data in an external memory DDR to the unified memory 2306, transfer the weight data to the weight memory 2302, or transfer the input data to the input memory 2301.

A vector calculation unit 2307 includes a plurality of operation processing units. When necessary, further processing is performed on an output of the operational circuit, such as vector multiplication, vector addition, an exponential operation, a logarithmic operation, or value comparison. The vector calculation unit 2307 is mainly configured to perform network calculation at a non-convolutional/fully connected layer in a neural network, for example, batch normalization (batch normalization), pixel-level summation, and upsampling on a feature plane.

In some implementations, the vector calculation unit 2307 can store, into the unified memory 2306, a processed output vector. For example, the vector calculation unit 2307 may apply a linear function or a non-linear function to the output of the operational circuit 2303, for example, perform linear interpolation on a feature plane extracted at a convolutional layer. For another example, a linear function or a non-linear function is applied to a vector of an accumulated value to generate an activation value. In some implementations, the vector calculation unit 2307 generates a normalized value, a pixel-level sum, or a normalized value and a pixel-level sum. In some implementations, the processed output vector can be used as an activation input to the operational circuit 2303, for example, used at a subsequent layer in the neural network.

The instruction fetch buffer (instruction fetch buffer) 2309 connected to the controller 2304 is configured to store an instruction used by the controller 2304.

The unified memory 2306, the input memory 2301, the weight memory 2302, and the instruction fetch buffer 2309 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, wherein the method comprises:

   obtaining to-be-processed data and a target neural network model, wherein the target neural network model comprises a first transformer (transformer) layer, the first transformer layer comprises a first residual branch and a second residual branch, the first residual branch comprises a first attention head, and the second residual branch comprises a target feedforward layer FFN;
   obtaining a weight value corresponding to a target task, wherein the weight value comprises a first weight value corresponding to the first attention head and/or a second weight value corresponding to the target FFN; and
   performing target task related processing on the to-be-processed data based on the target neural network model to obtain a data processing result, wherein the target neural network model is for performing a target operation on an output of the first attention head and the first weight value to obtain an output of the first residual branch, and/or the target neural network model is for performing a target operation on an output of the target FFN and the second weight value to obtain an output of the second residual branch.

2. The method according to claim 1, wherein

   when the target neural network model is for using the output of the first attention head as the output of the first residual branch, data processing precision of the target neural network model for the target task is less than first processing precision, and the first processing precision is data processing precision of the target neural network model when the target neural network model is for performing the target operation on the output of the first attention head and the first weight value to obtain the output of the first residual branch;
   when the target neural network model is for using the output of the target FFN as the output of the second residual branch, data processing precision of the target neural network model for the target task is less than second processing precision, and the second processing precision is data processing precision of the target neural network model when the target neural network model is for performing the target operation on the output of the target FFN and the second weight value to obtain the output of the second residual branch; or
   when the target neural network model is for using the output of the target FFN as the output of the second residual branch and using the output of the target FFN as the output of the second residual branch, data processing precision of the target neural network model for the target task is less than third processing precision, and the third processing precision is data processing precision of the target neural network model when the target neural network model is for performing the target operation on the output of the target FFN and the second weight value to obtain the output of the second residual branch and for performing the target operation on the output of the target FFN and the second weight value to obtain the output of the second residual branch.

3. The method according to claim 2, wherein the first weight value is obtained by updating a first initial weight value when the target neural network model is trained for the target task, and in a training process of the target neural network model, the target neural network model is for performing the target operation on the output of the first attention head and the first initial weight value to obtain the output of the first residual branch.

4. The method according to claim 2 or 3, wherein the second weight value is obtained by updating a second initial weight value when the target neural network model is trained for the target task, and in a training process of the target neural network model, the target neural network model is for performing the target operation on the output of the target FFN and the second initial weight value to obtain the output of the second residual branch.

5. The method according to any one of claims 2 to 4, wherein the obtaining a weight value corresponding to a target task comprises:
obtaining, based on a preset mapping relationship, the weight value corresponding to the target task, wherein the weight value corresponding to the target task comprises the first weight value and/or the second weight value, and the preset mapping relationship comprises a correspondence between a task and a weight value.

6. The method according to claim 2, wherein the obtaining a weight value corresponding to a target task comprises:

   inputting an identifier of the target task and at least one of the to-be-processed data and the output of the first attention head into a first neural network to obtain the first weight value; and/or inputting an identifier of the target task and at least one of the to-be-processed data and the output of the target FFN into a second neural network to obtain the second weight value.

7. The method according to claim 6, wherein the first neural network is obtained by updating a first initial neural network when the target neural network model is trained for the target task, and in a training process of the target neural network model, the target neural network model is for inputting the identifier of the target task and at least one of the to-be-processed data and the output of the first attention head into the first initial neural network, and performing a target operation on an output of the first initial neural network and the output of the first attention head to obtain the output of the first residual branch.

8. The method according to claim 6 or 7, wherein the second neural network is obtained by updating a second initial neural network when the target neural network model is trained for the target task, and in a training process of the target neural network model, the target neural network model is for inputting the identifier of the target task and at least one of the to-be-processed data and the output of the target FFN into the second initial neural network, and performing a target operation on an output of the second initial neural network and the output of the target FFN to obtain the output of the second residual branch.

9. The method according to any one of claims 1 to 8, wherein the first transformer layer comprises a plurality of attention heads, each of the plurality of attention heads corresponds to a weight value, the target neural network model is for performing a target operation on an output of each attention head and a corresponding weight value to obtain the output of the first residual branch, and different attention heads correspond to different weight values.

10. The method according to any one of claims 1 to 9, wherein the target operation comprises a product operation.

11. The method according to any one of claims 2 to 10, wherein the target task comprises one of the following: reading comprehension, text translation, restatement recognition, named entity recognition, text emotion analysis, natural language reasoning, text automatic question and answer, text intention recognition, text classification, text simplification, and text story generation.

12. A data processing method, wherein the method comprises:

    obtaining to-be-processed data and a target neural network model, wherein the target neural network model comprises a first transformer layer and a second transformer layer, and the first transformer layer comprises a first attention head and a target FFN;
    obtaining a weight value corresponding to a target task, wherein the weight value comprises a first weight value corresponding to the first attention head and/or a second weight value corresponding to the target FFN; and
    performing target task related processing on the to-be-processed data based on the target neural network model to obtain a data processing result, wherein the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer.

13. The method according to claim 12, wherein the target neural network model comprises a plurality of transformer layers and an output layer, and the second transformer layer is a transformer layer that is in the plurality of transformer layers and that is closest to the output layer.

14. The method according to claim 12 or 13, wherein the first transformer layer comprises a first residual branch and a second residual branch, and the first residual branch comprises the first attention head;

when the target neural network model is for using the output of the first attention head only as an output of the first residual branch, data processing precision of the target neural network model for the target task is less than first processing precision, and the first processing precision is data processing precision of the target neural network model when the target neural network model is for performing the first operation on the output of the first attention head and the first weight value to obtain the first output and performing the second operation on the third output and the output of the second transformer layer;

when the target neural network model is for using an output of the target FFN only as an output of the second residual branch, data processing precision of the target neural network model for the target task is less than second processing precision, and the second processing precision is data processing precision of the target neural network model when the target neural network model is for performing a first operation on the output of the target FFN and the second weight value to obtain the output of the second residual branch; or

when the target neural network model is for using the output of the first attention head only as an output of the first residual branch and using an output of the target FFN as an output of the second residual branch, data processing precision of the target neural network model for the target task is less than third processing precision, and the third processing precision is data processing precision of the target neural network model when the target neural network model is for performing the first operation on the output of the first attention head and the first weight value to obtain the first output and performing the second operation on the third output and the output of the second transformer layer, and for performing a first operation on the output of the target FFN and the second weight value to obtain the output of the second residual branch and performing a first operation on the output of the target FFN and the second weight value to obtain the output of the second residual branch.

15. The method according to any one of claims 12 to 14, wherein the first weight value is obtained by updating a first initial weight value when the target neural network model is trained for the target task, and in a training process of the target neural network model, the target neural network model is for performing a first operation on the output of the first attention head and the first initial weight value, and performing a second operation on an operation result and the output of the second transformer layer.

16. The method according to any one of claims 12 to 15, wherein the second weight value is obtained by updating a second initial weight value when the target neural network model is trained for the target task, and in a training process of the target neural network model, the target neural network model is for performing a first operation on the target FFN and the second initial weight value, and performing a second operation on an operation result and the output of the second transformer layer.

17. The method according to any one of claims 13 to 16, wherein the obtaining a weight value corresponding to a target task comprises:
obtaining, based on a preset mapping relationship, the weight value corresponding to the target task, wherein the weight value corresponding to the target task comprises the first weight value and/or the second weight value, and the preset mapping relationship comprises a correspondence between a task and a weight value.

18. The method according to claim 13, wherein the obtaining a weight value corresponding to a target task comprises:

inputting an identifier of the target task and at least one of the to-be-processed data and the output of the first attention head into a first neural network to obtain the first weight value; and/or inputting an identifier of the target task and at least one of the to-be-processed data and the output of the target FFN into a second neural network to obtain the second weight value.

19. The method according to claim 18, wherein the first neural network is obtained by updating a first initial neural network when the target neural network model is trained for the target task, and in a training process of the target neural network model, the target neural network model is for inputting the identifier of the target task and at least one of the to-be-processed data and the output of the first attention head into the first initial neural network, performing a first operation on an output of the first initial neural network and the output of the first attention head, and performing a second operation on an operation result and the output of the second transformer layer.

20. The method according to claim 18 or 19, wherein the second neural network is obtained by updating a second initial neural network when the target neural network model is trained for the target task, and in a training process of the target neural network model, the target neural network model is for inputting the identifier of the target task and at least one of the to-be-processed data and the output of the target FFN into the second initial neural network, performing a first operation on an output of the second initial neural network and the output of the target FFN, and performing a second operation on an operation result and the output of the second transformer layer.

21. The method according to any one of claims 12 to 20, wherein the first transformer layer comprises a plurality of attention heads, each of the plurality of attention heads corresponds to a weight value, correspondingly the target neural network model is for performing a first operation on an output of each attention head and a corresponding weight value to obtain a third output, and performing a second operation on the third output and the output of the second transformer layer, and different attention heads correspond to different weight values.

22. The method according to any one of claims 12 to 21, wherein the first operation comprises a product operation, and the second operation comprises a sum operation.

23. The method according to any one of claims 12 to 22, wherein the target task comprises one of the following:
reading comprehension, text translation, restatement recognition, named entity recognition, text emotion analysis, natural language reasoning, text automatic question and answer, text intention recognition, text classification, text simplification, and text story generation.

24. A data processing apparatus, wherein the apparatus comprises a memory and a processor, the memory stores code, and the processor is configured to obtain the code and perform the method according to any one of claims 1 to 23.

25. A computer storage medium, wherein the computer storage medium stores one or more instructions, and when the instructions are executed by one or more computers, the one or more computers are enabled to perform the method according to any one of claims 1 to 23.

FIG. 1

FIG. 2

User    User equipment

1:21 PM

**Interaction interface**

| Voice/Query statement/Text... | Voice response/Response Statement/Text... | ... |

Memory

Processor:

| Data training/Machine learning/Deep learning | Search/Reasoning/Decision-making | ... |

FIG. 3

FIG. 4

FIG. 5

Obtain to-be-processed data and a target neural network model, where the target neural network model includes a first transformer (transformer) layer, the first transformer layer includes a first residual branch and a second residual branch, the first residual branch includes a first attention head, and the second residual branch includes a target feedforward layer FFN

601

Obtain a weight value corresponding to a target task, where the weight value includes a first weight value corresponding to the first attention head and/or a second weight value corresponding to the target FFN

602

Process the to-be-processed data based on the target neural network model to obtain a data processing result, where the target neural network model is for performing a target operation on an output of the first attention head and the first weight value to obtain an output of the first residual branch, and/or the target neural network model is for performing a target operation on an output of the target FFN and the second weight value to obtain an output of the second residual branch

603

FIG. 6

Neural network model

Transformer layer

...

Transformer layer

Embedding layer

FIG. 7

FIG. 8

EP 4 209 965 A1

FIG. 9

$X_{l+1}$

First transformer layer

Addition and normalization layer

Second residual branch

Target feedforward layer FFN

Addition and normalization layer

First residual branch

Head 1 (First attention head)

Head 2

...

$X_l$

FIG. 10

$X_{l+1}$

First transformer layer

Addition and normalization layer

◯ * Second weight value

Target feedforward layer FFN

Addition and normalization layer

◯ * First weight value

Head 1 (First attention head)

$X_l$

FIG. 11

$X_{l+1}$

First transformer layer

Addition and normalization layer

◯ * Second weight value

Target feedforward layer FFN

Addition and normalization layer

◯ * First weight value    ◯ * Third weight value

Head 1 (First attention head)

Head 2 (Second attention head)

$X_l$

FIG. 12

Obtain to-be-processed data and a target neural network model, where the target neural network model includes a first transformer layer and a second transformer layer, and the first transformer layer includes a first attention head and a target FFN ⟋ 1301

Obtain a weight value corresponding to a target task, where the weight value includes a first weight value corresponding to the first attention head and/or a second weight value corresponding to the target FFN ⟋ 1302

Perform target task related processing on the to-be-processed data based on the target neural network model to obtain a data processing result, where the target neural network model is for performing a first operation on an output of the first attention head and the first weight value to obtain a first output and performing a second operation on the first output and an output of the second transformer layer, and/or the target neural network model is for performing a first operation on the target FFN and the second weight value to obtain a second output and performing a second operation on the second output and an output of the second transformer layer ⟋ 1303

FIG. 13

Sum operation

Second transformer layer

...

First transformer layer

Addition and normalization layer

Target feedforward layer FFN

* Second weight value

Addition and normalization layer

Head 1 (First attention head)

* First weight value

FIG. 14

1500

| | |
|---|---|
| 1501 | 1502 |
| Obtaining module | Data processing module |

FIG. 15

1600

| | |
|---|---|
| 1601 | 1602 |
| Obtaining module | Data processing module |

FIG. 16

1700

| | |
|---|---|
| 1701 | 1702 |
| Obtaining module | Data processing module |
| | 1703 |
| | Model update module |

FIG. 17

1800

| Obtaining module | Data processing module |
|---|---|

1801 1802

Model update module

1803

FIG. 18

1900

| Obtaining module | Data processing module |
|---|---|

1901 1902

Model update module

1903

FIG. 19

2000

| 2001 | 2002 |
|------|------|
| Obtaining module | Data processing module |

2003

Model update module

FIG. 20

2100

Execution device

Antenna                                    Antenna

| Receiver 2101 | Transmitter 2102 |

Processor 2103

| Memory 2104 | Application processor 21031 | Communication processor 21032 |

FIG. 21

FIG. 22

Host CPU

Weight memory
2302

Input memory
2301

Operational circuit
2303

Vector calculation
unit 2307

Accumulator
2308

Direct memory access
controller 2305

Unified
memory 2306

Controller
2304

Instruction fetch
buffer 2309

Bus interface unit 2310

External
memory

Neural network processing unit 2300

FIG. 23

### INTERNATIONAL SEARCH REPORT

| International application No. |
| --- |
| **PCT/CN2021/119306** |

**A. CLASSIFICATION OF SUBJECT MATTER**

G06N 3/04(2006.01)i; G06N 3/08(2006.01)i; G06F 7/523(2006.01)i

According to International Patent Classification (IPC) or to both national classification and IPC

**B. FIELDS SEARCHED**

Minimum documentation searched (classification system followed by classification symbols)

G06N; G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 神经网络, 转换, 残差, 注意力头, 前馈, 权值, 权重, 乘积, 多任务, neural w network, transformer, residual, attention w head, feed w forward, FFN, weights, multiplication, multi w task

**C. DOCUMENTS CONSIDERED TO BE RELEVANT**

| Category* | Citation of document, with indication, where appropriate, of the relevant passages | Relevant to claim No. |
| --- | --- | --- |
| PX | CN 1112288075 A (HUAWEI TECHNOLOGIES CO., LTD.) 29 January 2021 (2021-01-29) claims 1-25 | 1-25 |
| A | CN 111368993 A (HUAWEI TECHNOLOGIES CO., LTD.) 03 July 2020 (2020-07-03) description paragraphs [0006]- [0025] | 1-25 |
| A | CN 108665065 A (TSINGHUA UNIVERSITY) 16 October 2018 (2018-10-16) entire document | 1-25 |
| A | CN 110349676 A (SOUTH CHINA NORMAL UNIVERSITY) 18 October 2019 (2019-10-18) entire document | 1-25 |
| A | CN 110807517 A (ZHIZHESIHAI (BEIJING) TECHNOLOGY CO., LTD.) 18 February 2020 (2020-02-18) entire document | 1-25 |
| A | US 2020134454 A1 (SAMSUNG SDS CO., LTD.) 30 April 2020 (2020-04-30) entire document | 1-25 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 November 2021** | **15 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/119306**

| Patent document cited in search report | | | Publication date (day/month/year) | Patent family member(s) | | | Publication date (day/month/year) |
|---|---|---|---|---|---|---|---|
| CN | 1112288075 | A | 29 January 2021 | None | | | |
| CN | 111368993 | A | 03 July 2020 | WO | 2021159714 | A1 | 19 August 2021 |
| CN | 108665065 | A | 16 October 2018 | None | | | |
| CN | 110349676 | A | 18 October 2019 | None | | | |
| CN | 110807517 | A | 18 February 2020 | None | | | |
| US | 2020134454 | A1 | 30 April 2020 | KR | 20200052446 | A | 15 May 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011052624X